(19) Europäisches Patentamt
European Patent Office
Office européen des brevets

(11) **EP 3 611 202 A1**

(12) **EUROPÄISCHE PATENTANMELDUNG**

(43) Veröffentlichungstag:
**19.02.2020 Patentblatt 2020/08**

(21) Anmeldenummer: **18188754.8**

(22) Anmeldetag: **13.08.2018**

(51) Int Cl.:
***C08G 18/48*** *(2006.01)* ***C08G 18/69*** *(2006.01)*
***C08G 18/75*** *(2006.01)* ***C08G 18/80*** *(2006.01)*
***C08G 18/24*** *(2006.01)* ***C08G 59/18*** *(2006.01)*
***C08G 59/50*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **SIKA TECHNOLOGY AG**
**6340 Baar (CH)**

(72) Erfinder: **Gallo, Dominique**
**8112 Otelfingen (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(54) **EINKOMPONENTIGE HITZEHÄRTENDE EPOXIDHARZZUSAMMENSETZUNGEN**

(57) Die vorliegende Erfindung betrifft einkomponentige hitzehärtende Epoxidharzzusammensetzungen, welche besonders für das Verbinden von Substraten mit unterschiedlichen thermischen Ausdehnungskoeffizienten, insbesondere im Rohbau von Transportmitteln oder Weisswaren, geeignet. Die einkomponentige hitzehärtende Epoxidharzzusammensetzung umfasst

a) mindestens ein Epoxidharz **A** mit durchschnittlich mehr als einer Epoxidgruppe pro Molekül;
b) mindestens ein 2,4-Diamino-1,3,5-triazin **GU,** das in 6-Stellung
-einen Alkylrest mit 1 bis 20 C-Atomen, bei dem gegebenenfalls in $\alpha$-Stellung ein H-Atom durch einen 2,4-Diamino-1,3,5-triazin-6-yl-Rest ersetzt ist,
-einen Cycloalkylrest mit 5 bis 12 C-Atomen oder
-einen Arylrest mit 6 bis 12 C-Atomen enthält; und

c) mindestens einen Zähigkeitsverbesserer **D,** wobei es sich um ein endständig blockiertes Polyurethanpolymer **D1** handelt.

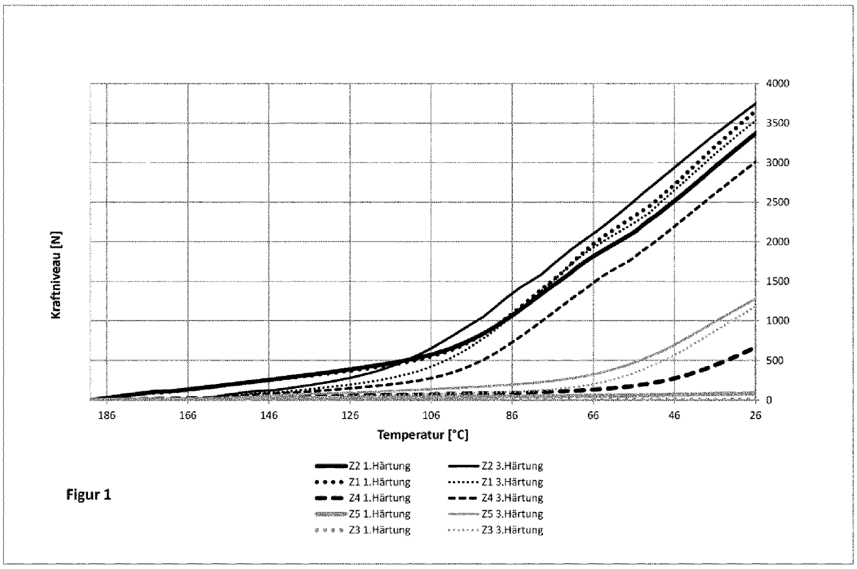

Figur 1

EP 3 611 202 A1

## Beschreibung

### Technisches Gebiet

Die Erfindung betrifft das Gebiet der hitzehärtenden Epoxidharzzusammensetzungen, insbesondere für das Verbinden von Substraten mit unterschiedlichen thermischen Ausdehnungskoeffizienten, insbesondere im Rohbau von Transportmitteln oder Weisswaren.

### Stand der Technik

Hitzehärtende Epoxidharzzusammensetzungen sind seit langem bekannt. Ein wichtiges Einsatzgebiet von hitzehärtenden Epoxidharzzusammensetzungen findet sich im Fahrzeugbau, insbesondere beim Verkleben im Rohbau von Transportmitteln oder Weisswaren. In beiden Fällen wird nach der Applikation der Epoxidharzzusammensetzung der verklebte Gegenstand in einem Ofen erhitzt, wodurch auch die hitzehärtende Epoxidharzzusammensetzung ausgehärtet wird.

Werden zwei Substrate mit unterschiedlichen thermischen Längenausdehnungskoeffizienten durch strukturelle Verklebung miteinander verbunden, führt eine Erhitzung im Ofen bei Temperaturen von 100 - 220°C dazu, dass sich die beiden Substrate auf unterschiedliche Längen ausdehnen. Bei der nachfolgenden Abkühlung entsteht dadurch in der ausgehärteten Epoxidharzzusammensetzung eine hohe Spannung, welche entweder zum Versagen der Klebstoffverbindung, zu einer Verformung der Substrate oder zu einem sogenannten "Einfrieren" der Spannung in der Klebverbindung führt. Durch ein solches "Einfrieren" reagiert die Klebverbindung während der Lebensdauer wesentlich empfindlicher auf statische, dynamische und Stoßbelastungen, was zu einer Schwächung der Klebverbindung führen kann.

Beim Verkleben im Rohbau von Transportmitteln werden die verklebten Bauteile typischerweise mindestens dreimal in einem Ofen erhitzt. Die erste Erwärmung des verklebten Bauteils dient der Aushärtung der kathodischen Tauchlackierung (KTL) im KTL-Ofen. Danach wird auf die ausgehärtete KTL-Schicht typischerweise (eine) weitere Beschichtung(en) aufgebracht, die zum Ausgleichen von Unebenheiten und der Haftvermittlung dient, und in einem zweiten Ofen ausgehärtet. Darauf folgt der Auftrag des Klarlacks (clearcoat) und in einem dritten Ofen die Aushärtung des Klarlacks. Dabei weist typischerweise der erste Ofen die höchste Temperatur auf, typischerweise zwischen 140 - 200 °C. "Eingefrorene" Spannungen in der Klebverbindung nehmen die Bauteile daher besonders in dem ersten Erwärmungsschritt auf, was für die nachfolgenden zwei Erwärmungsschritte aufgrund der zusätzlichen Belastungen der Klebverbindung bei den erneuten Abkühlphasen besonders nachteilig ist.

Es besteht deshalb ein Bedürfnis nach hitzehärtenden Epoxidharzzusammensetzungen zum strukturellen Verbinden von Substraten mit unterschiedlichen thermischen Längenausdehnungskoeffizienten, welche einerseits über ausreichende mechanische Eigenschaften für strukturelles Verbinden verfügen und andererseits den bei wiederholter Erwärmung auftretenden hohen Spannungen ohne Versagen der strukturellen Verbindung zu widerstehen.

### Darstellung der Erfindung

Aufgabe der vorliegenden Erfindung ist es daher, hitzehärtende Epoxidharzzusammensetzungen geeignet zum strukturellen Verbinden von Substraten mit unterschiedlichen thermischen Längenausdehnungskoeffizienten zur Verfügung zu stellen, welche einerseits über ausreichende mechanische Eigenschaften für strukturelles Verbinden verfügen und andererseits den Verbund trotz der bei wiederholter Erwärmung auftretenden hohen Spannungen ohne Versagen der strukturellen Verbindung gewährleisten.

Diese Aufgabe konnte überraschenderweise durch eine erfindungsgemässe Verwendung gemäss Anspruch 1 gelöst werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine einkomponentige hitzehärtende Epoxidharzzusammensetzung umfassend

a) mindestens ein Epoxidharz **A** mit durchschnittlich mehr als einer Epoxidgruppe pro Molekül;
b) mindestens ein 2,4-Diamino-1,3,5-triazin **GU,** das in 6-Stellung

- einen Alkylrest mit 1 bis 20 C-Atomen, bei dem gegebenenfalls in $\alpha$-Stellung ein H-Atom durch einen 2,4-Diamino-1,3,5-triazin-6-yl-Rest ersetzt ist,

- einen Cycloalkylrest mit 5 bis 12 C-Atomen oder
- einen Arylrest mit 6 bis 12 C-Atomen enthält;

c) mindestens einen Zähigkeitsverbesserer **D,** wobei es sich um ein endständig blockiertes Polyurethanpolymer **D1** handelt.

Das Gewichtsverhältnis des mindestens einen Epoxidharz **A** mit durchschnittlich mehr als einer Epoxidgruppe pro Molekül zu dem mindestens einen Zähigkeitsverbesserer **D** beträgt von 0.4 - 3.3.

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

Unter einem "Zähigkeitsverbesserer" wird in diesem Dokument ein Zusatz zu einer Epoxidharzmatrix verstanden, der bereits bei geringen Zuschlägen von ≥ 5 Gew.-%, insbesondere ≥ 10 Gew.-%, bezogen auf das Gesamtgewicht der Epoxidharzzusammensetzungen, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht $M_n$ einer oligomeren oder polymeren Mischung von Molekülen bezeichnet, welches üblicherweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Der Begriff "primäre Aminogruppe" bezeichnet im vorliegenden Dokument eine $NH_2$-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist. Demzufolge wird ein Amin, welches eine primäre Aminogruppe aufweist, als "primäres Amin" bezeichnet, ein solches mit einer sekundären Aminogruppe wird entsprechend als "sekundäres Amin" und ein solches mit einer tertiären Aminogruppe als "tertiäres Amin" bezeichnet.

Als "Raumtemperatur" wird im vorliegenden Dokument eine Temperatur von 23°C bezeichnet.

## Beschreibung Messmethode für das Kraftniveau

Werden zwei Substrate, beispielsweiser Metalle oder faserverstärkte Kunststoffe, mit unterschiedlichen thermischen Längenausdehnungskoeffizienten ($\Delta\alpha$) durch strukturelle Verklebung, insbesondere im Karosserierohbau, miteinander verbunden, führen Erwärmungsschritte im Ofen bei Temperaturen von 100 - 220°C, beispielsweise beim Durchlaufen eines Konvektionsofens, dazu, dass sich die beiden Substrate auf unterschiedliche Längen ausdehnen. Bei der nachfolgenden Abkühlung, beispielsweise beim Durchlaufen von Abkühlzonen, entsteht dadurch in der teilweise oder ganz ausgehärteten Epoxidharzzusammensetzung eine hohe Spannung, welche entweder zum Versagen der Klebstoffverbindung, zu einer Verformung der Substrate oder zu einem sogenannten "Einfrieren" der Spannung in der Klebverbindung führt.

Um das Verhalten von ausgehärteten Epoxidharzzusammensetzungen besser untersuchen zu können wurde eine Labormethode zur Bewertung ihrer Toleranz gegenüber "$\Delta\alpha$ induzierter" Spannungen entwickelt.

Anstatt eine Spannung über eine thermische Längenausdehnung zu induzieren, welches Probekörper mit ähnlichen Dimensionen wie reale Karosserie-Bauteile benötigen würde, wurde bei der Labormethode die "$\Delta\alpha$ Spannung" über eine Zugprüfmaschine auf eine Zugscherprobe appliziert. Der Temperaturverlauf im Konvektionsofen wurde dabei von zwei Thermoelementen simuliert, die es ermöglichen, die Zugscherprobe im Bereich der Klebefläche mit definierter Aufheiz-und Abkühlraten zu temperieren. Da die Abkühlphase die kritischste ist, wurde bei dieser Prüfung nur während der Abkühlung eine Spannung über die Zugprüfmaschine appliziert. Je nach Einstellung der Zuggeschwindigkeit an der Zugprüfmaschine lassen sich so variable Spannungsfälle simulieren, die bei verschieden Substratkombinationen zustande kommen würden.

### Verwendete Prüfkörper und deren Präparation

Für die Simulation "$\Delta\alpha$ induzierter" Spannungen wurden Zugscherprüfkörper verwendet, die aus verzinktem Stahlblech (1.5mm Dicke, Streckgrenze 420MPa) folgendermassen hergestellt wurden:

Präparation:

1.) Stahlblech (25mm x 100mm x 1.5mm) mit Heptan reinigen und anschliessend mit $3g/m^2$ Anticorit PL3802-39S (Tiefziehöl, FUCHS Schmierstoffe GmbH) definiert beölen.
2.) Klebefläche (10mm x 25mm) mit Teflon-Spacer (1.5mm Dicke) begrenzen und Epoxidharzzusammensetzung applizieren.
3.) Bleche fügen und Klebefläche jeweils mit einer Klammer seitlich fixieren.
4A.) Simulation des Härtungszustandes nach KTL-Ofen (1. Härtung); die Zugscher-Proben werden zur Simulation einer Erhitzung im KTL-Ofen für 35min (Verweilzeit) bei 175°C temperiert, oder
4.B) Simulation des Härtungszustandes nach Durchlaufen aller Prozessöfen (3. Härtung, Prozesshärtung); zur Simulation des Härtungszustandes nach Durchlaufen aller Prozessöfen (nach 1.-, 2- und 3. Härtung) werden die Zugscher-Proben wie folgt temperiert:

- 35min (Verweilzeit) bei 175°C (1. Härtung, Simulation KTL-Ofen), anschliessend auf 23°C abkühlen,
- 35min (Verweilzeit) bei 160°C (2. Härtung, Simulation Füller-Ofen) anschliessend auf 23°C abkühlen,
- 35min (Verweilzeit) bei 165°C (3. Härtung, Simulation Klarlack-Ofen) anschliessend auf 23°C abkühlen.

5.) Bei der 4A.) wird nach Abkühlen der Proben der Teflon-Spacer entfernt. Bei 4B.) wird der Teflon-Spacer erst nach dem 3. Erhitzungsschritt, nach Abkühlen, entfernt.

Parameterbestimmung

Wie bereits erwähnt lassen sich bei dieser Prüfmethode verschiedene $\Delta\alpha$ induzierte Spannungsfälle, über die Einstellung der Geschwindigkeit, mit der die Zugscherprobe gezogen wird, simulieren. Nachfolgend soll am Beispiel einer Materialkombination bestehend aus Aluminum um Stahl ($\Delta\alpha = 13 * 10^{-6} K^{-1}$), die notwendige Zuggeschwindigkeit, unter Berücksichtigung von Gleichungen (1) und (2), berechnet werden.
Wärmeausdehnung fester Körper in linearer Näherung

Gleichung (1) $$\Delta L = L_0 * \alpha * \Delta T$$

Gleichung (2) $$\Delta T = T_2 - T_1$$

Die Ausgangslänge $L_0$ beider Fügepartner soll 1000mm betragen. Entsprechend gängiger Temperaturverläufe in Konvektionsöfen wurde zur Aufheizung- bzw. Abkühlung der Proben das in der Figur 5 gezeigte Temperatur Profil definiert (für den Fall 1.Härtung). Daraus ergeben sich Start- und Endtemperatur $T_1/T_2$ sowie die Temperaturdifferenz $\Delta T$. Aufheiz-und Abkühlgeschwindigkeiten wurden ebenfalls Automobil-industrie üblich mit 40°C/min gewählt.

$$L_0 = 1000mm$$

$$\alpha_{Stahl} = 10.8 * 10^{-6}[K^{-1}]$$

$$\alpha_{Alu} = 23.8 * 10^{-6}[K^{-1}]$$

$\Delta T = 165\,[K]$ für 1. Härtung, $\Delta T = 140\,[K]$ für 3. Härtung

$T_2 = 190[°C]$ für 1. Härtung, $T_2 = 165[°C]$ für 3. Härtung

$$T_1 = 25\,[°C]$$

Gleichung (4)

$$\Delta L_{Stahl} = 1000mm * 10.8 * 10^{-6}K^{-1} * 165K = 1.782mm \text{ für 1. Härtung}$$

$$\Delta L_{Stahl} = 1000mm * 10.8 * 10^{-6}K^{-1} * 140K = 1.512mm \text{ für 3. Härtung}$$

Gleichung (5)

$$\Delta L_{Alu} = 1000mm * 23.8 * 10^{-6}K^{-1} * 165K = 3.927mm \text{ für 1. Härtung}$$

$$\Delta L_{Alu} = 1000mm * 23.8 * 10^{-6}K^{-1} * 140K = 3.332mm \text{ für 3. Härtung}$$

Die Wärmeausdehnungskoeffizienten für Stahl $\alpha_{Stahl}$ und Aluminium $\alpha_{Alu}$ wurden der Literatur entnommen. Setzt man die definierten Werte in Gleichung 1 und 2 ein, erhält man die Wärmeausdehnung $\Delta L$ für Stahl und Aluminium entsprechend Gleichung 4 und 5. Daraus resultiert während der Aufheizphase eine Längenausdehnungsdifferenz von 2.145mm, respektive 1.820 mm, um die sich Aluminium starker als Stahl ausdehnt. Entsprechend muss die ausgehärtete Epoxidharzzusammensetzung, welcher eine stoffschlüssige Verbindung bildet, eine Schrumpfdifferenz von ebenfalls 2.145mm, respektive 1.820 mm, während der Abkühlphase kompensieren. Unter Berücksichtigung der Abkühlgeschwindigkeit $V_A$ von 40°C /min ergibt sich somit gemäss Gleichung 6 und 7 eine Zuggeschwindigkeit $V_{Zug}$ von 0.52mm /min.

Gleichung (6)

$$V_{Zug} = (\Delta L_{Alu} - \Delta L_{Stahl}) * \frac{V_A}{(T_2 - T_1)}$$

Gleichung (7)

$$V_{Zug} = (3.927mm - 1.782mm) * \frac{40\frac{°C}{min}}{(190°C - 25°C)} = 0.52\text{mm/min für 1. Härtung}$$

$$V_{Zug} = (3.332mm - 1.512mm) * \frac{40\frac{°C}{min}}{(165°C - 25°C)} = 0.52\text{mm/min für 3. Härtung}$$

Durchführung einer Messung:

1.) Eine entsprechend der vorgehend beschriebenen Präparationsanleitung hergestellte Zugscherprobe wird in eine Zugprüfmaschine eingespannt. Vorerst wird allerdings nur die untere Klemmbacke fixiert. Die Einspannlänge beträgt 100 mm.
2.) Beide Thermoelemente werden an die Probe gepresst, sodass sie in Kontakt mit der Klebefläche stehen.
3.) An der Steuereinheit wird Start- und Endtemperatur auf 25°C und 190°C, respektive 165°C, eingestellt. Für Aufheiz- und Abkühlgeschwindigkeiten wird 40°C/min eingegeben.
4.) Die Aufheizphase wird gestartet.
5.) Beim Erreichen der Endtemperatur von 190°C, respektive 165°C, wird diese mittels Countdown für 2min gehalten um eine gleichmässige Erwärmung der Klebefläche sicherzustellen.
6.) 30 Sekunden vor Ablauf des Countdown wird die Zugscherprobe nun auch durch die obere Klemmbacke fixiert.
7.) Mit Ablauf des Countdown wird automatisch die Abkühlphase gestartet. Zeitgleich wird manuell über die Steuersoftware der Zugprüfmaschine eine Zugscher-Prüfung mit einer Zuggeschwindigkeit von 0.52 mm/min gestartet.

Messergebnisse und Auswertung

Als Messergebnis wurde das Kraftniveau am Ende der Abkühlphase bestimmt, d.h. bei Erreichen einer Längenausdehnung von 2.145 mm für 1.Härtung, respektive 1.820 mm für 3.Härtung. Je höher hier das Kraftniveau ist, desto mehr sind eingefrorenen Spannungen in der Epoxidharzzusammensetzung und irreversible Deformationen in den Substraten zu erwarten. Entsprechend ist hier ein möglichst tiefes Kraftniveau ein vorteilhaftes Ergebnis ("$\Delta\alpha$ toleranter").
Die Zugscherprobe wurde von 190 °C für 1.Härtung, respektive 165 °C für 3.Härtung, mit einer Abkühlgeschwindigkeit von 40°C/min auf eine Temperatur von 25°C gekühlt. Im Zugscherversuch wurde mit einer Zuggeschwindigkeit $V_{zug}$ von 0.52 mm/min gemessen. Pro Epoxidharzzusammensetzung wurde eine Dreifach-bestimmung durchgeführt.

Weiter von Interesse ist der Versagenszeitpunkt. Passiert dies vor dem Ende der Abkühlphase, d.h. tritt ein Bruch bei einer Zuggeschwindigkeit $V_{Zug}$ von 0.52mm /min vor Erreichen einer Längenausdehnung von 2.145mm, respektive 1.820 mm, auf, wird die "$\Delta\alpha$ Toleranz" der Epoxidharzzusammensetzung als nachteilig gewertet, da eine solche Epoxidharzzusammensetzung in einer realen Anwendung mit ($L_0$ = 1000mm und $\Delta\alpha$ = 13 * $10^{-6}K^{-1}$ zu einem Bauteilversagen führen würde. Im Gegensatz dazu, falls der Bruch bei Dehnungen $\geq$2.145mm, respektive $\geq$1.820 mm auftritt, wird dies als bevorzugte "$\Delta\alpha$ Toleranz" angesehen. Je höher dabei die Längenausdehnung ausfällt umso besser ist die "$\Delta\alpha$ Toleranz".

Bei dem Zugscherversuch handelt es sich um einen Zugscherversuch zur Bestimmung der Zugscherfestigkeit gemäss DIN EN 1465.

Vorzugsweise beträgt die gemessene Kraftniveau $\leq$ 6000 N, vorzugsweise $\leq$ 5000 N, vorzugsweise $\leq$ 4500 N, vorzugsweise $\leq$ 4000 N, vorzugsweise $\leq$ 3500 N, vorzugsweise $\leq$ 3000 N, vorzugsweise $\leq$ 2500 N, vorzugsweise $\leq$ 2000 N.

Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxidharze weisen die Formel (II) auf

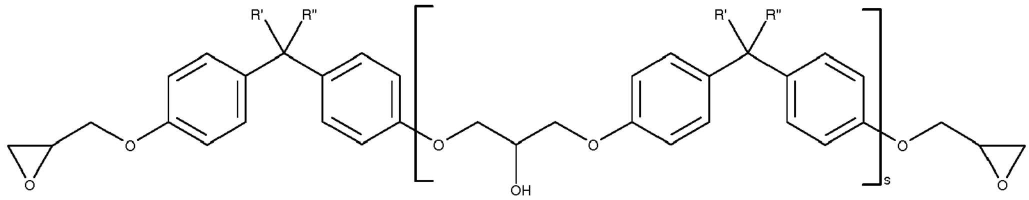

(II)

Hierbei stehen die Substituenten R' und R" unabhängig voneinander entweder für H oder $CH_3$.

Bei Epoxid-Festharzen steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (II) mit einem Index s von 1 bis 1.5 werden vom Fachmann als Semisolid-Epoxidharze bezeichnet. Für die hier vorliegende Erfindung werden sie ebenfalls als Festharze betrachtet. Bevorzugt als Epoxid-Festharze sind jedoch Epoxidharze im engeren Sinn, d.h. wo der Index s einen Wert von > 1.5 aufweist.

Bei Epoxid-Flüssigharze steht der Index s für einen Wert von kleiner als 1. Bevorzugt steht s für einen Wert von kleiner als 0.2.

Es handelt sich somit vorzugsweise um Diglycidylether von Bisphenol-A (DGEBA), von Bisphenol-F sowie von Bisphenol-A/F. Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Weiterhin bevorzugt als Epoxidharz **A** sind sogenannte Epoxid-Novolake. Diese weisen insbesondere die folgende Formel auf:

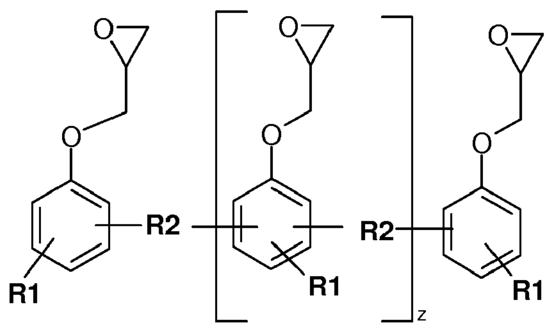

mit **R2=**

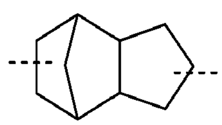

oder $CH_2$, **R1** = H oder Methyl und z = 0 bis 7.

Insbesondere handelt es sich hierbei um Phenol- oder Kresol-Epoxid-Novolake (**R2** = $CH_2$).

Solche Epoxidharze sind unter dem Handelnamen EPN oder ECN sowie Tactix® von Huntsman oder unter der Produktereihe D.E.N.™ von Dow Chemical kommerziell erhältlich.

Besonders bevorzugt stellt das Epoxidharz **A** ein Epoxid-Flüssigharz der Formel (II) dar.

In einer ganz besonders bevorzugten Ausführungsform enthält die hitzehärtende Epoxidharzzusammensetzung sowohl mindestens ein Epoxid-Flüssigharz der Formel (II) mit s < 1, insbesondere kleiner als 0.2, als auch mindestens ein Epoxid-Festharz der Formel (II) mit s > 1.5, insbesondere von 2 bis 12.

Der Anteil von Epoxidharzes **A** beträgt vorzugsweise 10 - 60 Gew.-%, insbesondere 30 - 50 Gew.-%, bezogen auf das Gesamtgewicht der Epoxidharzzusammensetzung.

Weiter ist es vorteilhaft, wenn es sich bei 60-100 Gew.-%, insbesondere 60-80 Gew.-%, des Epoxidharzes **A** um ein vorgenanntes Epoxid-Flüssigharz der Formel (II) handelt.

Weiter ist es vorteilhaft, wenn es sich bei 0-40 Gew.-%, insbesondere 20-40 Gew.-%, des Epoxidharzes **A** um ein vorgenanntes Epoxid-Festharz der Formel (II) handelt.

Vorzugsweise handelt es sich bei dem Epoxidharz **A** nicht um einen Reaktivverdünner **G,** wie er nachfolgend beschrieben ist.

Die einkomponentige hitzehärtende Epoxidharzzusammensetzung umfasst b) mindestens ein 2,4-Diamino-1,3,5-triazin GU, das in 6-Stellung

- einen Alkylrest mit 1 bis 20 C-Atomen, bei dem gegebenenfalls in α-Stellung ein H-Atom durch einen 2,4-Diamino-1,3,5-triazin-6-yl-Rest ersetzt ist,
- einen Cycloalkylrest mit 5 bis 12 C-Atomen oder
- einen Arylrest mit 6 bis 12 C-Atomen

enthält.

Dies ist gegenüber einkomponentigen hitzehärtenden Epoxidharzzusammensetzungen, welche mit Dicyandiamid augehärtet werden, dahingehend von Vorteil, dass signifikant tiefere E-modul nach einer ersten Härtung erhalten werden. Dies ist beispielsweise in Tabelle 4 im Vergleich von Z1 und Z2 mit Z3-Z5 ersichtlich. Die Werte für das E-modul nach der 3ten Härtung sind jedoch vergleichbar mit Z1 und Z2. Weiter sind die Werte für die Bruchdehnung und insbesondere die Werte für die Zugfestigkeit und die Zugscherfestigkeit vergleichbar mit den Werten von Z1 und Z2.

Weiter ist aus der Figur 1 ersichtlich, dass die Z2 gegenüber Z3-Z5 nach einer ersten Härtung eine signifikant höhere verbleibende Spannung/Kraftniveau aufweist. Insbesondere nach der ersten Härtung ist der Unterschied im Kraftniveau von Z2 gegenüber Z3-Z5 besonders ausgeprägt.

Vorzugsweise ist das mindestens eine 2,4-Diamino-1,3,5-triazin (GU) ausgewählt aus der Liste bestehend aus
6-Methyl-2,4-diamino-1,3,5-triazin (Acetoguanamin),
6-Ethyl-2,4-diamino-1,3,5-triazin (Propioguanamin),
6-Propyl-2,4-diamino-1,3,5-triazin (Butyroguanamin),
6-Isopropyl-2,4-diamino-1,3,5-triazin (Isobutyroguanamin),
6-Nonyl-2,4-diamino-1,3,5-triazin (Caprinoguanamin),
6-Heptadecyl-2,4-diamino-1,3,5-triazin (Palmitinguanamin),
6-Cyclopentyl-2,4-diamino-1,3,5-triazin,
6-Cyclohexyl-2,4-diamino-1,3,5-triazin,
6-Cyclohexylmethyl-2,4-diamino-1,3,5-triazin,
6-Methylcyclohexyl-2,4-diamino-1,3,5-triazin,
6-Phenyl-2,4-diamino-1,3,5-triazin (Benzoguanamin),
6-(3-Pyridyl)-2,4-diamino-1,3,5-triazin,
6-Benzyl-2,4-diamino-1,3,5-triazin (Phenylacetoguanamin),
6-Toluyl-2,4-diamino-1,3,5-triazin,
6-Ethyl-2,4-diamino-1,3,5-triazin,
6,6'-Ethylenebis(1,3,5-triazine-2,4-diamine) (Succinoguanamin) und
6,6'-(Butane-1,4-diyl)bis(1,3,5-triazine-2,4-diamine) (Adipoguanamin).

Vorzugsweise handelt es sich bei dem mindestens einen 2,4-Diamino-1,3,5-triazin (GU) um ein 2,4-Diamino-1,3,5-triazin (GU), das in 6-Stellung

- einen Alkylrest mit 1 bis 20 C-Atomen, insbesondere 1 bis 10 C-Atomen, 1 bis 9 C-Atomen, 1 bis 3 C-Atomen, besonders bevorzugt 1 C-Atom, bei dem sich in α-Stellung ein H-Atom befindet; oder
- einen Arylrest mit 6 bis 12 C-Atomen, insbesondere 6-7 C-Atomen, besonders bevorzugt 6 C-Atomen;

enthält.

Besonders bevorzugt handelt es sich bei dem mindestens einen 2,4-Diamino-1,3,5-triazin (GU) um ein 2,4-Diamino-1,3,5-triazin (GU), das in 6-Stellung einen Alkylrest mit 1 bis 20 C-Atomen, insbesondere 1 bis 10 C-Atomen, 1 bis 9 C-Atomen, 1 bis 3 C-Atomen, besonders bevorzugt 1 C-Atome, bei dem sich in $\alpha$-Stellung ein H-Atom befindet, enthält.

Aus Tabelle 4 ist aus dem Vergleich von Z1 und Z2 mit Z3-Z5 ersichtlich, dass dadurch besonders hohe Werte für die Schlagschälfestigkeit bei - 30°C und für die Winkelschälfestigkeit erhalten werden.

Besonders bevorzugt ist das mindestens eine 2,4-Diamino-1,3,5-triazin (GU) ausgewählt aus der Liste bestehend aus
6-Nonyl-2,4-diamino-1,3,5-triazin (Caprinoguanamin),
6-Phenyl-2,4-diamino-1,3,5-triazin (Benzoguanamin) und
6-Methyl-2,4-diamino-1,3,5-triazin (Acetoguanamin),
insbesondere bevorzugt
6-Phenyl-2,4-diamino-1,3,5-triazin (Benzoguanamin) und
6-Methyl-2,4-diamino-1,3,5-triazin (Acetoguanamin),
am meisten bevorzugt
6-Methyl-2,4-diamino-1,3,5-triazin (Acetoguanamin).

Vorzugsweise beträgt das Mol-Verhältnis der Molmenge an 2,4-Diamino-1,3,5-triazin **GU** zu der Molmenge Epoxidgruppen des Epoxidharz **A** von 3.8 - 4.2, insbesondere 3.9 - 4.1.

Vorzugsweise beträgt das Verhältnis der Gesamtmenge an 2,4-Diamino-1,3,5-triazin **GU** zuzüglich gegebenenfalls der Gesamtmenge Dicyandiamid zu der Gesamtmenge an Epoxidgruppen des Epoxidharz **A** von 80% - 120%, insbesondere 90% - 110%, besonders bevorzugt 95% - 105%, eines für eine stöchiometrischen Aushärtung notwendigen Verhältnisses. Für 2,4-Diamino-1,3,5-triazin **GU** wird hierzu eine Härterfunktionalität von 4, für Dicyandiamid eine Härterfunktionalität von 5.5 angenommen.

Handelt es sich bei dem mindestens einen 2,4-Diamino-1,3,5-triazin (GU) um 6-Phenyl-2,4-diamino-1,3,5-triazin (Benzoguanamin) ist dies dahingehend von Vorteil, dass dadurch sowohl hohe Werte für die Schlagschälfestigkeit - 30°C und die Winkelschälfestigkeit als auch besonders tiefe Werte für das Kraftniveau erhalten werden. Dies ist beispielsweise im Vergleich von Z3 mit Z4-5 in Tabelle 4 und in Figur 1 ersichtlich.

Weiter kann es vorteilhaft sein, wenn es sich bei dem mindestens einen 2,4-Diamino-1,3,5-triazin (GU) um 2,4-Diamino-1,3,5-triazin (GU) handelt, die in 6-Stellung einen Arylrest mit 6 bis 12 C-Atomen, insbesondere 6-7 C-Atomen, besonders bevorzugt 6 C-Atome enthalten, und die einkomponentige hitzehärtende Epoxidharzzusammensetzung weiter Dicyandiamid enthält.

Dies ist hohen Werten für die Schlagschälfestigkeit (23°C, - 30°C) sowie der Winkelschälfestigkeit zuträglich. Weiter vermindert dies die Blasenbildung im aushärtenden Klebstoff. Dies ist beispielsweise in Tabelle 4 im Vergleich von Z6 mit Z8 und Z10 und im Vergleich von Z6-7 mit Z3-5 ersichtlich. Aus Figur 2 ist ersichtlich, dass die Kombination von Dicyandiamid mit Acetoguanamin zu einem frühen Klebeversagen führt.

Vorzugsweise beträgt das Mol-Verhältnis von 2,4-Diamino-1,3,5-triazin **GU,** die in 6-Stellung einen Arylrest mit 6 bis 12 C-Atomen enthalten, zu Dicyandiamid von 9.0 - 2.0, insbesondere 7.0 - 3.0, bevorzugt von 6.0 - 4.0. Aus Figur 2 und Figur 4 ist ersichtlich, dass ein solches Verhältnis zu einem tieferen Kraftniveau führt.

Weiter kann es vorteilhaft sein, wenn die erfindungsgemässen hitzehärtenden Epoxidharzzusammensetzungen weniger als 10 Gew.-%, weniger als 5 Gew.-%, insbesondere weniger als 1 Gew.-%, bevorzugt weniger als 0.5 Gew.-%, besonders bevorzugt weniger als 0.3 Gew.-%, am meisten bevorzugt weniger als 0.1 Gew.-%, an Alkydharzen, Acrylharzen, Melaminharzen und/oder Melamin-Phenol-Formaldehyd-Harzen, insbesondere Melaminharzen, aufweisen, bezogen auf das Gesamtgewicht der Epoxidharzzusammensetzung.

Unter dem Begriff "Alkydharz", "Acrylharz", "Melaminharz" und "Melamin-Phenol-Formaldehyd-Harz", werden im vorliegenden Dokument Zusammensetzungen verstanden, wie sie beschreiben sind in Römpp Chemie Lexikon, online-Version, Georg Thieme Verlag, abgerufen am 17 Juni 2018.

Weiter kann es vorteilhaft sein, wenn die erfindungsgemässen hitzehärtenden Epoxidharzzusammensetzungen weniger als 5 Gew.-%, insbesondere weniger als 1 Gew.-%, bevorzugt weniger als 0.5 Gew.-%, besonders bevorzugt weniger als 0.3 Gew.-%, weniger als 0.1 Gew.-%, am meisten bevorzugt weniger als 0.05 Gew.-%, an Beschleunigern für Epoxidharze ausgewählt aus der Liste bestehend aus substituierten Harnstoffen, Imidazolen, Imidazolinen und Amin-Komplexen, insbesondere substituierten Harnstoffen, aufweisen, bezogen auf das Gesamtgewicht der Epoxidharzzusammensetzung.

Solche beschleunigend wirksame Härter sind beispielsweise substituierte Harnstoffe, wie beispielsweise 3-(3-Chlor-4-methylphenyl)-1,1-dimethylharnstoff (Chlortoluron) oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin möglich sind Verbindungen der Klasse der Imidazole, wie 2-Isopropylimidazol oder 2-Hydroxy-N-(2-(2-(2-hydroxyphenyl)-4,5-dihydroimidazol-1-yl)ethyl)benzamid, Imidazoline und Amin-Komplexe.

Es wurden Verbindungen entsprechend der Zusammensetzung im Beispielteil Z3, Z4 oder Z5 zusätzlich 0.8, respektive 0.2 Gewichtsteile an einem substituierten Harnstoff zugegeben. Dies führte jedoch bei der 1. Härtung zu einer derart hohen Gasbildung in der Zusammensetzung, dass eine Messung der Klebeverbindung nicht mehr möglich war.

Weiter kann es vorteilhaft sein, wenn die erfindungsgemässen hitzehärtenden Epoxidharzzusammensetzungen weniger als 5 Gew.-%, insbesondere weniger als 1 Gew.-%, bevorzugt weniger als 0.5 Gew.-%, besonders bevorzugt weniger als 0.3 Gew.-%, am meisten bevorzugt weniger als 0.1 Gew.-%, an Härtern für Epoxidharze ausgewählt aus der Liste bestehend aus Anhydride von mehrwertigen Carbonsäuren und Dihydrazide aufweisen, bezogen auf das Gesamtgewicht der Epoxidharzzusammensetzung.

Die einkomponentige hitzehärtende Epoxidharzzusammensetzung enthält mindestens einen Zähigkeitsverbesserer **D.** Die Zähigkeitsverbesserer **D** können fest oder flüssig sein.

Es handelt sich bei dem Zähigkeitsverbesserer **D** um ein endständig blockiertes Polyurethanpolymer **D1,** insbesondere um ein endständig blockiertes Polyurethanpolymer der Formel (I).

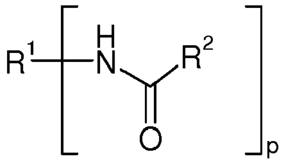 (I)

Hierbei steht $R^1$ für einen p-wertigen Rest eines mit Isocyanatgruppen terminierten linearen oder verzweigten Polyurethanprepolymers nach dem Entfernen der endständigen Isocyanatgruppen und p für einen Wert von 2 bis 8.

Weiter steht $R^2$ für eine Blockierungsgruppe, welche sich bei einer Temperatur über 100°C abspaltet.

Vorzugsweise steht $R^2$ unabhängig voneinander für einen Substituenten, welcher ausgewählt ist aus der Gruppe bestehend aus

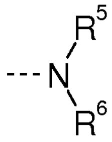 , 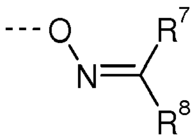 , 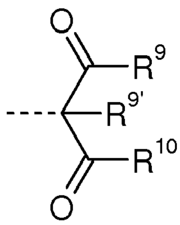 , 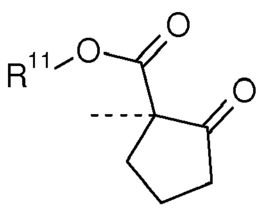 ,

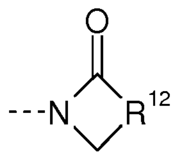 , 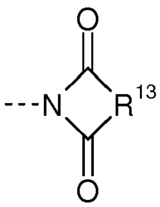 , 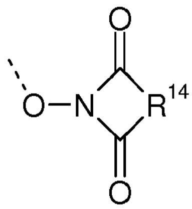 , 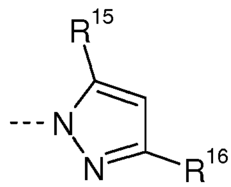 ,

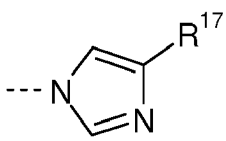 , 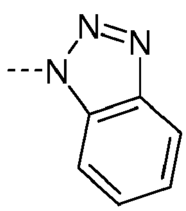 , 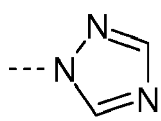 , 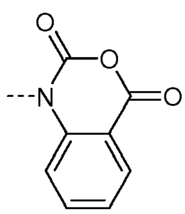 ,

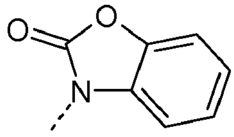,

---O-$R^{18}$ und

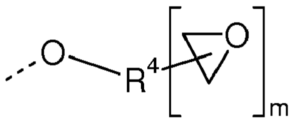.

Hierbei steht $R^5$, $R^6$, $R^7$ und $R^8$ je unabhängig voneinander für eine Alkyl- oder Cycloalkyl- oder Aralkyl- oder Arylalkyl-Gruppe, oder $R^5$ bildet zusammen mit $R^6$, oder $R^7$ zusammen mit $R^8$, einen Teil eines 4- bis 7-gliedrigen Rings bilden, welcher gegebenenfalls substituiert ist.

Weiterhin stehen $R^{9'}$ und $R^{10}$ je unabhängig voneinander für eine Alkyl- oder Aralkyl- oder Arylalkyl-Gruppe oder für eine Alkyloxy- oder Aryloxy- oder Aralkyloxy-Gruppe und $R^{11}$ für eine Alkylgruppe.

$R^{12}$, $R^{13}$ und $R^{14}$ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe.

$R^{15}$, $R^{16}$ und $R^{17}$ stehen je unabhängig voneinander für H oder für eine Alkylgruppe oder für eine Arylgruppe oder eine Aralkylgruppe und $R^{18}$ steht für eine Aralkylgruppe oder für eine ein- oder mehrkernige substituierte oder unsubstituierte Aromatengruppe, welche gegebenenfalls aromatische Hydroxylgruppen aufweist.

Schliesslich steht $R^4$ für einen Rest eines eine primäre oder sekundäre Hydroxylgruppe enthaltenden aliphatischen, cycloaliphatischen, aromatischen oder araliphatischen Epoxids nach dem Entfernen der Hydroxy- und Epoxidgruppen und m für einen Wert von 1, 2 oder 3.

Besonders bevorzugt stehen $R^2$ unabhängig voneinander für einen Substituenten, welcher ausgewählt ist aus der Gruppe bestehend aus

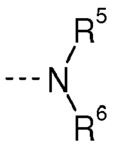, 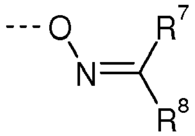, 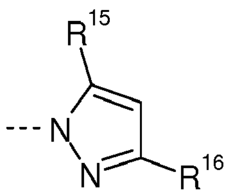, 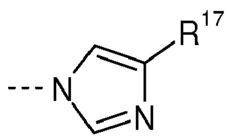,

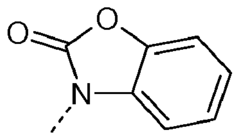,

und ---O-$R^{18}$, insbesondere

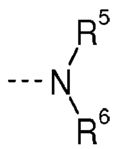, 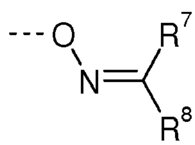, 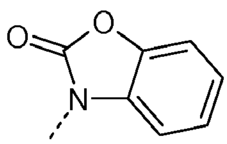

und ---O-$R^{18}$, vorzugsweise

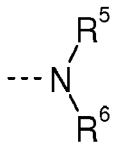, 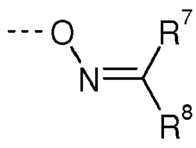,

und ---O-$R^{18}$, besonders bevorzugt

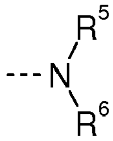

---O-$R^{18}$ und am meisten bevorzugt für

---O-$R^{18}$

Als $R^{18}$ sind insbesondere Phenole nach Entfernung einer Hydroxylgruppe zu betrachten. Bevorzugte Bespiele für derartige Phenole sind insbesondere ausgewählt aus der Liste bestehend aus Phenol, Kresol, 4-Methoxyphenol (HQMME), Resorcinol, Brenzkatechin, Cardanol (3-Pentadecenylphenol (aus Cashewnuss-Schalen-Öl)) und Nonylphenol.

Als $R^{18}$ sind andererseits insbesondere Hydroxybenzylalkohol und Benzylalkohol nach Entfernung einer Hydroxylgruppe zu betrachten.

Als Substituent der Formel ---O-$R^{18}$ sind Monophenole nach Entfernung eines phenolischen Wasserstoffatoms bevorzugt. Besonders bevorzugte Bespiele für derartigen Reste $R^2$ sind Reste, welche ausgewählt sind aus der Gruppe bestehend aus

, 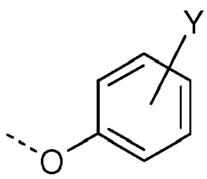, 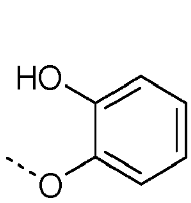, 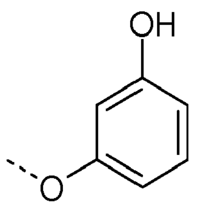, 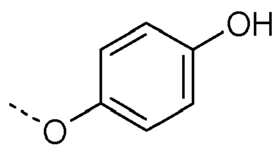

und

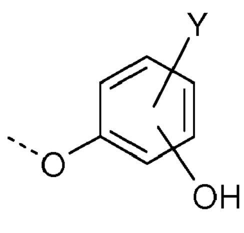,

bevorzugt

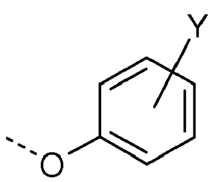.

Der Rest Y steht hierbei für einen gesättigten, aromatischen oder olefinisch ungesättigten Kohlenwasserstoffrest

mit 1 bis 20 C-Atomen, insbesondere mit 1 bis 15 C-Atomen. Als Y sind insbesondere Allyl, Methyl, Nonyl, Dodecyl, Phenyl, Alkylether, insbesondere Methyether, Carbonsäureester oder ein ungesättigter $C_{15}$-Alkylrest mit 1 bis 3 Doppelbindungen bevorzugt. Am meisten bevorzugt ist Y ausgewählt aus der Gruppe bestehend aus Alkylether, insbesondere Methyether, und ungesättigter $C_{15}$-Alkylrest mit 1 bis 3 Doppelbindungen.

Besonders bevorzugt handelt es sich um ein $R^{18}$ um Phenole nach Entfernung einer Hydroxylgruppe, besonders bevorzugte Bespiele für derartige Phenole sind ausgewählt aus der Liste bestehend aus 4-Methoxyphenol (HQMME) und Cardanol (3-Pentadecenylphenol (aus Cashewnuss-Schalen-Öl)).

Die Herstellung des endständig blockierten Polyurethanprepolymers der Formel (I) erfolgt aus dem Isocyanatgruppen terminierten linearen oder verzweigten Polyurethanprepolymer mit einer oder mehreren Isocyanatreaktiven Verbindungen $R^2H$. Falls mehrere derartige Isocyanat-reaktive Verbindungen eingesetzt werden, kann die Reaktion sequentiell oder mit einer Mischung dieser Verbindungen erfolgen.

Das Polyurethanprepolymer mit Isocyanat-Endgruppen, auf dem $R^1$ basiert, lässt sich insbesondere aus mindestens einem Diisocyanat oder Triisocyanat sowie aus einem Polymeren $\mathbf{Q_{PM}}$ mit endständigen Amino-, Thiol- oder Hydroxylgruppen herstellen.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat ($H_{12}$MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate. Selbstverständlich können auch geeignete Mischungen von Di- oder Triisocyanaten eingesetzt werden.

Als Polymere $\mathbf{Q_{PM}}$ mit endständigen Amino-, Thiol- oder Hydroxylgruppen sind insbesondere geeignet Polymere $\mathbf{Q_{PM}}$ mit zwei oder drei endständigen Amino-, Thiol- oder Hydroxylgruppen.

Die Polymere $\mathbf{Q_{PM}}$ weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere $\mathbf{Q_{PM}}$ bevorzugt sind Polyole mit mittleren Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, Polytetramethylenetherglycolen, hydroxylterminierten Polybutadienen, hydroxylterminierten Butadien-Acrylnitril-Copolymeren sowie deren Gemische, insbesondere bevorzugt sind Polytetramethylenetherglycole und hydroxylterminierte Polybutadiene.

Es können ein oder mehrere Polytetramethylenetherglycole eingesetzt werden. Polytetramethylenetherglycol wird auch als Polytetrahydrofuran oder PTMEG bezeichnet. PTMEG kann z.B. durch Polymerisation von Tetrahydrofuran, z.B. über saure Katalyse, hergestellt werden. Die Polytetramethylenetherglycole sind insbesondere Diole.

Polytetramethylenetherglycole sind im Handel erhältlich, z. B. die PolyTHF®-Produkte von BASF wie PolyTHF®2000, PolyTHF®2500 CO oder PolyTHF®3000 CO, die Terathane®-Produkte von Invista B.V oder die Polymeg® Produkte von LyondellBasell.

Die OH-Funktionalität des eingesetzten Polytetramethylenetherglycols liegt bevorzugt im Bereich von etwa 2, z.B. im Bereich von 1,9 bis 2,1. Dies ist durch die kationische Polymerisation des Ausgangsmonomeren Tetrahydrofuran gegeben.

Vorteilhaft sind Polytetramethylenetherglycole mit OH-Zahlen zwischen 170 mg/KOH g bis 35 mg KOH/g, bevorzugt im Bereich von 100 mg KOH/g bis 40 mg KOH/g, und ganz besonders bevorzugt 70 bis 50 mg KOH/g. Sofern nicht anders angegeben, wird in der vorliegenden Anmeldung die OH-Zahl titrimetrisch gemäß DIN 53240 bestimmt. Hierbei wird die Hydroxylzahl durch Acetylierung mit Essigsäureanhydrid und nachfolgender Titration des überschüssigen Essigsäureanhydrids mit alkoholischer Kalilauge bestimmt.

Mit Kenntnis der Difunktionalität können aus den titrimetrisch ermittelten Hydroxylzahlen die OH-Äquivalentgewichte beziehungsweise das mittlere Molekulargewicht des eingesetzten Polytetramethylenetherglycols bestimmt werden.

Vorteilhaft in der vorliegenden Erfindung eingesetzte Polytetramethylenetherglycole weisen bevorzugt ein mittleres Molekulargewicht im Bereich von 600 bis 5000 g/mol, bevorzugter 1000 bis 3000 g/mol und besonders bevorzugt im Bereich von 1.500 bis 2.500 g/mol, insbesondere etwa 2000 g/mol, auf.

Es können ein oder mehrere Hydroxy-terminiertes Polybutadiene eingesetzt werden. Es können auch Mischungen von zwei oder mehr Hydroxy-terminierten Polybutadienen eingesetzt werden.

Geeignete Hydroxy-terminierten Polybutadiene sind insbesondere solche, die durch radikalische Polymerisation von 1,3-Butadien hergestellt werden, wobei z.B. ein Azonitril oder Wasserstoffperoxid als Initiator verwendet wird. Hydroxy-terminierte Polybutadiene sind im Handel erhältlich, z.B. die Poly bd®-Produkte von Cray Valley wie Poly bd® R45V, Polyvest®HT von Evonik sowie Hypro®2800X95HTB von Emerald Performance Materials LLC.

Das Hydroxy-terminierte Polybutadien weist bevorzugt ein mittleres Molekulargewichts von weniger als 5.000, auf, bevorzugt im Bereich von 2000 bis 4000 g/mol. Die OH-Funktionalität des Hydroxy-terminierten Polybutadiens liegt bevorzugt im Bereich von 1,7 bis 2,8, bevorzugt von 2,4 bis 2,8.

Weiter bevorzugt sind Hydroxy-terminierte Polybutadiene mit einem Acrylnitril-Anteil von weniger als 15%, vorzugsweise weniger als 5% insbesondere bevorzugt weniger als 1%, insbesondere bevorzugt von weniger als 0.1%. Am meisten bevorzugt sind Hydroxy-terminierte Polybutadiene frei von Acrylnitril.

Bezogen auf das Gesamtgewicht der zur Herstellung des Isocyanat-terminierten Polymers eingesetzten Polyole beträgt der Gesamtanteil an Polytetramethylenetherglycol und Hydroxy-terminiertem Polybutadien vorzugsweise mindestens 95 Gew.-% und bevorzugt mindestens 98 Gew.-%. In einer bevorzugten Ausführungsform werden nur Polytetramethylenetherglycol und/oder Hydroxy-terminiertes Polybutadien als Polyole eingesetzt.

Das Gewichtsverhältnis von Polytetramethylenetherglycol zu Hydroxy-terminierten Polybutadien liegt bevorzugt im Bereich von 100/0 bis 70/30, bevorzugter von 100/0 bis 60/40, bevorzugter von 100/0 bis 90/10 und ganz besonders bevorzugt bei 100/0.

In einer bevorzugten Ausführungsform wird das Polyurethanprepolymer aus mindestens einem Diisocyanat oder Triisocyanat sowie aus einem Polymeren $\mathbf{Q_{PM}}$ mit endständigen Amino-, Thiol- oder Hydroxylgruppen hergestellt. Die Herstellung des Polyurethanprepolymers erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren $\mathbf{Q_{PM}}$ eingesetzt wird.

Das Polyurethanprepolymer mit Isocyanatendgruppen weist bevorzugt elastischen Charakter auf. Es zeigt bevorzugt eine Glasumwandlungstemperatur Tg von kleiner als 0°C.

Das Gewichtsverhältnis des mindestens einen Epoxidharz **A** mit durchschnittlich mehr als einer Epoxidgruppe pro Molekül zu dem mindestens einen Zähigkeitsverbesserer **D** beträgt von 0.4 - 3.3.

Ein Gewichtsverhältnis von weniger als 0.4 ist dahingehend von Nachteil, dass dadurch die Zusammensetzungen sehr langsam oder gar nicht aushärten. Weiter werden insbesondere tiefe Werte in E-modul, Zugfestigkeit und Winkelschälfestigkeit erhalten.

Ein Gewichtsverhältnis von mehr als 3.3 sind dahingehend von Nachteil, dass dadurch die Zusammensetzungen erhalten werden, welche geringe Werte für die Bruchdehnung aufweisen.

Vorzugsweise beträgt das Gewichtsverhältnis weniger als 2.8, insbesondere weniger als 2.4, besonders bevorzugt weniger als 2.0, dadurch wird die delta-alpha Resistenz verbessert, insbesondere werden tiefere Werte für das Kraftniveau erhalten. Dies ist in Figur 3 ersichtlich. Während bei Z2a bereits bei der ersten Härtung ein Klebeversagen eintritt, ist der der Z6a erst bei der 3ten Härtung eine leichte Schwächung der Klebeverbindung ersichtlich.

Vorzugsweise beträgt das Gewichtsverhältnis des mindestens einen Epoxidharz **A** mit durchschnittlich mehr als einer Epoxidgruppe pro Molekül zu dem mindestens einen Zähigkeitsverbesserer **D** von 0.55 - 2.4, besonderes bevorzugt 0.7 - 2.0, 1.0 - 1.8, am meisten bevorzugt 1.0 - 1.6. Dies ist dahingehend von Vorteil, dass dadurch die Zusammensetzungen hohe Werte für E-modul und Zugfestigkeit nach der dritten Härtung aufweisen. Weiter werden gleichzeitig tiefe Werte für das Kraftniveau, insbesondere nach der ersten Härtung, erhalten.

In einer weiteren bevorzugten Ausführungsform enthält die Zusammensetzung zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente.

Vorteilhaft beträgt der Gesamtanteil des gesamten Füllstoffs **F** 5 - 40 Gewichts-%, vorzugsweise 10-30 Gewichts-%, bezogen auf das Gesamtgewicht der Epoxidharzzusammensetzung.

In einer weiteren bevorzugten Ausführungsform enthält die Zusammensetzung zusätzlich mindestens einen Epoxidgruppen-tragenden Reaktivverdünner **G.** Solche Reaktivverdünner sind dem Fachmann bekannt. Bevorzugte Beispiele für Epoxidgruppen-tragende Reaktivverdünner sind:

- Glycidylether von monofunktionellen gesättigten oder ungesättigten, verzweigten oder unverzweigten, zyklischen oder offenkettigen $C_4$ - $C_{30}$ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen $C_2$ - $C_{30}$ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.

- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der Epoxidharzzusammensetzung.

Die Zusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll® bzw. Dellatol BBS von Bayer kommerziell erhältlich sind.

Als Stabilisatoren eignen sich insbesondere gegebenenfalls substituierte Phenole, wie BHT oder Wingstay® T (Elikem), sterisch gehinderte Amine oder N-Oxylverbindungen wie TEMPO (Evonik).

Eine besonders bevorzugte einkomponentige Epoxidharzzusammensetzung umfasst:

- 10 - 70 Gew.-%, insbesondere 30 - 60 Gew.-%, bezogen auf das Gesamtgewicht der Epoxidharzzusammensetzung, Epoxidharz **A** mit durchschnittlich mehr als einer Epoxidgruppe pro Molekül; vorzugsweise handelt es sich bei 60-85 Gew.-%, 60-80 Gew.-%, insbesondere 65-80 Gew.-%, besonders bevorzugt 70-80 Gew.-%, des Epoxidharzes **A** um ein Epoxid-Flüssigharz und bei 15-40 Gew.-%, 20-40 Gew.-%, 20-35 Gew.-%, insbesondere 20-30 Gew.-%, des Epoxidharzes **A** um ein Epoxid-Festharz;.
- mindestens ein 2,4-Diamino-1,3,5-triazin **GU,** vorzugsweise ausgewählt aus ausgewählt ist aus der Liste bestehend aus 6-Nonyl-2,4-diamino-1,3,5-triazin (Caprinoguanamin), 6-Phenyl-2,4-diamino-1,3,5-triazin (Benzoguanamin) und 6-Methyl-2,4-diamino-1,3,5-triazin (Acetoguanamin); insbesondere 6-Phenyl-2,4-diamino-1,3,5-triazin (Benzoguanamin) und 6-Methyl-2,4-diamino-1,3,5-triazin (Acetoguanamin); am meisten bevorzugt 6-Methyl-2,4-diamino-1,3,5-triazin (Acetoguanamin);
- mindestens einen vorgenannten Zähigkeitsverbesserer **D,** wobei jene bevorzugt sind, welche vorgehend als bevorzugte Zähigkeitsverbesserer **D** beschrieben wurden, vorzugsweise beträgt dabei der Anteil an Zähigkeitsverbesserer **D** 20 -60 Gew.-%, 25 -55 Gew.-%, 30 -50 Gew.-%, besonders bevorzugt 30 -45 Gew.-%, bezogen auf das Gesamtgewicht der Epoxidharzzusammensetzung;
- vorzugsweise 5 - 40 Gewichts-%, vorzugsweise 10 - 30 Gewichts-%, bezogen auf das Gesamtgewicht der Epoxidharzzusammensetzung, von einem Füllstoffe **F** ausgewählt vorzugsweise aus der Gruppe bestehend aus Wollastonit, Calciumcarbonat, Calciumoxid, Farbpigmenten, insbesondere Russ, und pyrogene Kieselsäuren, insbesondere Calciumcarbonat, Calciumoxid und pyrogene Kieselsäuren;
- vorzugsweise 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der Epoxidharzzusammensetzung, von einen Epoxidgruppen-tragenden Reaktivverdünner **G;**
- wobei
    - das Gewichtsverhältnis des mindestens einen Epoxidharz **A** mit durchschnittlich mehr als einer Epoxidgruppe pro Molekül zu dem mindestens einen Zähigkeitsverbesserer **D** von 0.55 - 2.4, besonderes bevorzugt 0.7 - 2.0, 1.0 - 1.8, am meisten bevorzugt 1.0 - 1.6, besonderes bevorzugt 1.0 - 1.6, beträgt.

Weiter kann es vorteilhaft sein, wenn die bevorzugte einkomponentige Epoxidharzzusammensetzung zu mehr als 80 Gewichts-%, vorzugsweise mehr als 90 Gewichts-%, insbesondere mehr als 95 Gewichts-%, insbesondere bevorzugt mehr als 98 Gewichts-%, am meisten bevorzugt mehr als 99 Gewichts-%, bezogen auf das Gesamtgewicht der Epoxidharzzusammensetzung, aus den vorgenannten Bestandteilen besteht.

Es ist vorteilhaft, wenn die erfindungsgemässe Epoxidharzzusammensetzung eine Viskosität bei 25°C von 100 - 10000 Pa*s, insbesondere 500 - 5000 Pa*s, vorzugsweise 1000 - 3000 Pa*s, aufweist. Dies ist dahingehend von Vorteil, dass dadurch eine gute Applizierbarkeit gewährleistet ist. Vorzugsweise wird die Viskosität gemessen auf einem Rheometer vom Typ MCR 101 des Herstellers Anton Paar oszillatorisch unter Verwendung einer Platten-Platten Geometrie bei einer Temperatur von 25°C mit folgenden Parametern: 5 Hz, 1 mm Spalt, Platte-Platte-Abstand 25 mm, 1%

Deformation.

Besonders bevorzugt handelt es sich um hitzehärtende Epoxidharzzusammensetzungen, welche im ausgehärteten Zustand:

- eine Zugscherfestigkeit, insbesondere gemessen nach DIN EN 1465, besonders bevorzugt wie in dem Beispielteil beschrieben, von mehr als 10 MPa, mehr als 15 MPa, mehr als 20 MPa, aufweisen, und/oder
- eine Zugfestigkeit, insbesondere gemessen nach DIN EN ISO 527, besonders bevorzugt wie in dem Beispielteil beschrieben, von mehr als 10 MPa, mehr als 15 MPa, mehr als 20 MPa, aufweisen, und/oder
- eine Bruchdehnung, insbesondere gemessen nach DIN EN ISO 527, besonders bevorzugt wie in dem Beispielteil beschrieben, von mehr als 10%, mehr als 15%, mehr als 20%, insbesondere 20 - 200 %, besonders bevorzugt 30 - 150 %, aufweisen, und/oder

- ein E-Modul insbesondere gemessen nach DIN EN ISO 527, besonders bevorzugt wie in dem Beispielteil beschrieben, von 800 - 1500 MPa, insbesondere von 500 - 1200 MPa, und/oder
- eine Schlagschälfestigkeit, insbesondere gemessen nach ISO 11343, besonders bevorzugt wie in dem Beispielteil beschrieben, von mehr als 30 N/mm, mehr als 40 N/mm, mehr als 50 N/mm bei 23°C, aufweisen, und/oder
- eine Schlagschälfestigkeit, insbesondere gemessen nach ISO 11343, besonders bevorzugt wie in dem Beispielteil beschrieben, von mehr als 25 N/mm, mehr als 30 N/mm, mehr als 40 N/mm, mehr als 50 N/mm bei -30°C, aufweisen, und/oder
- eine Winkelschälfestigkeit, insbesondere gemessen nach DIN 53281, besonders bevorzugt wie in dem Beispielteil beschrieben, von mehr als 5 N/mm, mehr als 8 N/mm, mehr als 10 N/mm, aufweisen.

Es hat sich gezeigt, dass sich die beschriebenen hitzehärtenden Epoxidharzzusammensetzungen besonders zur Verwendung als einkomponentige hitzehärtende Klebstoffe, insbesondere als hitzehärtender einkomponentiger Klebstoff im Fahrzeugbau und Sandwichpanelbau, eignen. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit, sowohl bei höheren Temperaturen und bei tiefen Temperaturen auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220°C, vorzugsweise 120 - 200°C zumindest während der Aushärtezeit formstabil sind. Insbesondere handelt es sich hierbei um Metalle und Kunststoffe wie ABS, Polyamid, Epoxidharz, Polyesterharz, Polyphenylenether, faserverstärkte Kunststoffe wie Glasfaser- und Kohlefaserverstärkte Kunststoffe. Besonders bevorzugt als Kunststoffe sind faserverstärkte Kunststoffe. Bevorzugt ist die Anwendung, bei der zumindest ein Material ein Metall ist. Als besonders bevorzugte Verwendung gilt das Verkleben von unterschiedlichen Metallen, insbesondere Metallen mit unterschiedlichen thermischen Längenausdehnungskoeffizienten ($\Delta\alpha$) und/oder das Verkleben von Metallen mit faserverstärkten Kunststoffen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Ein solcher Klebstoff wird insbesondere zuerst mit den zu verklebenden Materialien bei einer Temperatur von zwischen 10°C und 80°C, insbesondere zwischen 10°C und 60°C, kontaktiert und später ausgehärtet bei einer Temperatur von typischerweise 100 - 220°C, vorzugsweise 140 - 200°C.

Einen weiteren Aspekt der vorliegenden Erfindung betrifft daher eine Verwendung einer hitzehärtenden Epoxidharzzusammensetzung wie sie vorgehend beschrieben ist als einkomponentiger hitzehärtender Klebstoff, insbesondere als hitzehärtender einkomponentiger Klebstoff im Fahrzeugbau und Sandwichpanelbau, insbesondere im Fahrzeugbau.

Aus einer derartigen vorgehend genannten Verwendung resultiert ein verklebter Artikel. Ein derartiger Artikel ist vorzugsweise ein Fahrzeug oder ein Teil eines Fahrzeugs.

Einen weiteren Aspekt der vorliegenden Erfindung betrifft daher ein verklebter Artikel erhalten aus der vorgenannten Verwendung. Selbstverständlich können mit einer erfindungsgemässen Zusammensetzung neben hitzehärtenden Klebstoffen auch Dichtmassen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer vorgenannten Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Ein weiterer Aspekt der vorliegenden Erfindung betrifft ein Verfahren zur Verklebung von hitzestabilen Substraten, welches die Schritte umfasst:

a) Applizieren einer hitzehärtenden Epoxidharzzusammensetzung wie sie vorgehend beschrieben ist auf die Oberfläche eines hitzestabilen Substrates **S1,** insbesondere eines Metalls;
b) Kontaktieren der applizierten hitzehärtenden Epoxidharzzusammensetzung mit der Oberfläche eines weiteren hitzestabilen Substrates **S2,** insbesondere eines Metalls;
c) Erhitzen der Epoxidharzzusammensetzung auf eine Temperatur von 100 bis 220°C, vorzugsweise 140 - 220°C, insbesondere von 140 - 200°C, bevorzugt zwischen 160 und 190°C;
d) Abkühlen der Epoxidharzzusammensetzung auf eine Temperatur von weniger als 50°C, vorzugsweise 50 - 10°C, insbesondere von 40 - 15°C.
e) Erneutes Erhitzen der Epoxidharzzusammensetzung auf eine Temperatur von 100 bis 220°C, vorzugsweise 100 - 200°C, insbesondere von 100 - 170°C, bevorzugt zwischen 120 und 170°C.
f) Vorzugsweise erneutes Abkühlen der Epoxidharzzusammensetzung auf eine Temperatur von weniger als 50°C, vorzugsweise 50 - 10°C, insbesondere von 40 - 15°C.
g) Vorzugsweise erneutes Erhitzen der Epoxidharzzusammensetzung auf eine Temperatur von 100 bis 220°C, vorzugsweise 100 - 200°C, insbesondere von 100 - 170°C, bevorzugt zwischen 120 und 170°C.

Unter hitzestabilen Materialien **S1,** respektive **S2,** werden Materialien verstanden, welche bei einer Aushärtetemperatur von 100 - 220°C, vorzugsweise 120 - 200°C zumindest während der Aushärtezeit formstabil sind. Insbesondere handelt es sich hierbei um Metalle und Kunststoffe wie ABS, Polyamid, Epoxidharz, Polyesterharz, Polyphenylenether, faserverstärkte Kunststoffe wie Glasfaser- und Kohlefaserverstärkte Kunststoffe. Besonders bevorzugt als Kunststoffe sind faserverstärkte Kunststoffe. Bevorzugt ist zumindest ein Material ein Metall.
Als besonders bevorzugtes Verfahren gilt das Verkleben von hitzestabilen Substraten, insbesondere Metallen, mit unterschiedlichen thermischen Längenausdehnungskoeffizienten ($\Delta\alpha$) und/oder das Verkleben von Metallen mit faserverstärkten Kunststoffen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.
Besonders bevorzugt beträgt der Unterschied im thermischen Längenausdehnungskoeffizient ($\Delta\alpha$) zwischen dem hitzestabilen Material **S1** und dem hitzestabilen Material **S2** 10 - 25 * $10^{-6}$ [$K^{-1}$], insbesondere 10 - 15 * $10^{-6}$ [$K^{-1}$].
Es ist vorteilhaft, wenn in dem Schritt c) und in dem Schritt e) und gegebenenfalls vorzugsweise in dem Schritt g) Erhitzen der Epoxidharzzusammensetzung, die Epoxidharzzusammensetzung für 20 min - 60 min, 25 min - 55 min, 30 min - 50 min, besonders bevorzugt 30 min - 40 min, bei der vorgenannten Temperatur, insbesondere der jeweils als bevorzugt ausgewiesenen Temperatur, belassen wird.
Vorzugsweise erfolgt in dem Schritt c) und e) und gegebenenfalls f) das Erhitzen der Epoxidharzzusammensetzung in einem Ofen.
Es ist vorteilhaft, wenn in dem Schritt d) und vorzugsweise in dem Schritt f) Abkühlen der Epoxidharzzusammensetzung auf eine Temperatur von weniger als 50°C, vorzugsweise 50 - 10°C, insbesondere von 40 - 15°C,
die Epoxidharzzusammensetzung für mehr als 5 min, mehr als 10 min, mehr als 20 min, mehr als 25 min, insbesondere bevorzugt 30-60 min, bei der vorgenannten Temperatur belassen wird.
Vorzugsweise findet zwischen Schritt c) und e) und gegebenenfalls zwischen Schritt e) und g) mit dem Verbund der Epoxidharzzusammensetzung mit den hitzestabilen Substraten **S1** und **S2** ein örtlicher Transportschritt, beispielsweise der Transport zu einem anderen Ofen, statt.
Weiter ist es auch vorteilhaft, wenn zwischen Schritt c) und e) und gegebenenfalls zwischen Schritt e) und g) eine Zeitspanne von mehr als 5 min, mehr als 10 min, mehr als 20 min, mehr als 25 min insbesondere bevorzugt 30-120 min, am meisten bevorzugt 30 - 60 min, liegt.
Weiter liegt vorzugsweise zwischen Schritt a) und c) eine Zeitspanne von weniger als 12 h, weniger als 3 h, insbesondere bevorzugt 30 - 120 min.

**Beispiele**

Im Folgenden werden einige Beispiele aufgeführt, welche die Erfindung weiter veranschaulichen, den Umfang der Erfindung aber in keiner Weise beschränken sollen.

Bestimmung des Isocyanatgehaltes

Der Isocyanatgehalt wurde in Gew.-% mittels einer Rücktitration mit im Überschuss eingesetztem Di-n-butylamin und 0,1 M Salzsäure bestimmt. Alle Bestimmungen wurden halbmanuell auf einem Mettler-Toledo Titrator des Typs DL50 Graphix mit automatischer potentiometrischer Endpunktbestimmung durchgeführt. Dazu wurden jeweils 600-800 mg der zu bestimmenden Probe unter Erwärmen in einer Mischung aus 10 ml Isopropanol und 40 ml Xylol

gelöst und anschließend mit einer Lösung von Dibutylamin in Xylol umgesetzt. Überschüssiges Di-n-butylamin wurde mit 0,1 M Salzsäure titriert und daraus der Isocyanatgehalt berechnet.

Kraftniveau

Das Kraftniveau wurde wie vorgehend unter "Beschreibung Messmethode für das Kraftniveau" beschrieben bestimmt. Pro Epoxidharzzusammensetzung wurde eine Dreifach-Bestimmung durchgeführt. Das Kraftniveau ist die am Ende der Abkühlphase bei 25 °C gemessene Kraft, d.h. bei Erreichen einer Längenausdehnung von 2.145 mm für 1.Härtung, respektive 1.820 mm für 3.Härtung.

Zugfestigkeit (ZF), Bruchdehnung (BD) und E-Modul (DIN EN ISO 527)

Eine Klebstoffprobe wurde zwischen zwei Teflonpapieren auf eine Schichtdicke von 2mm verpresst. Nach 35 min Aushärtung bei 175°C wurden die Teflonpapiere entfernt und die Probekörper nach DIN-Norm Zustand ausgestanzt. Die Prüfkörper wurden unter Normklima mit einer Zuggeschwindigkeit von 2 mm/min gemessen. Die Zugfestigkeit, Bruchdehnung und das E-Modul 0,05-0,25% wurden gemäss DIN EN ISO 527 bestimmt.

Zugscherfestigkeit (ZSF) (DIN EN 1465)

Gereinigte und mit Anticorit PL 3802-39S rückbeölte Prüfbleche von Stahl H420+Z (Dicke 1,2 mm) wurden auf einer Klebfläche von 25 x 10mm mit Glaskugeln als Abstandshalter in einer Schichtdicke von 1.5 mm mit dem Klebstoff verklebt und unter den angegebenen Härtungsbedingungen ausgehärtet.
Härtungsbedingungen: a) 35 min bei 175°C Ofentemperatur.
Die Zugscherfestigkeit wurde auf einer Zugmaschine bei einer Zuggeschwindigkeit von 10mm/min in einer 3-fach Bestimmung gemäss DIN EN 1465 bestimmt.

Winkelschälfestigkeit (T-Peel) (DIN 53281)

Es wurden Prüfbleche a 130 x 25 mm aus Stahl DC-04+ZE (Dicke 0,8mm) präpariert. Prüfbleche wurden auf einer Höhe von 30 mm mit einer geeigneten Stanzmaschine abgewickelt (90°). Die gereinigten und mit Anticorit PL 3802-39S rückbeölten Flächen von 100 x 25 mm wurden mit Glaskugeln als Abstandshalter in einer Schichtdicke von 0,3 mm mit dem Klebstoff verklebt und für 35 min Verweilzeit ab Erreichen einer Ofentemperatur von 175 °C ausgehärtet. Die Winkelschälfestigkeit wurde auf einer Zugmaschine mit einer Zuggeschwindigkeit von 100 mm/min in einer 2-fach Bestimmung als Schälkraft in N/mm im Bereich des Traversenweges von 1/6-bis 5/6 Weglänge bestimmt.

Schlagschälfestigkeit (IP) (gemäss ISO 11343)

Die Probenkörper wurden mit dem Klebstoff und Stahl DC04+ZE mit dem Mass 90 x 20 x 0,8mm hergestellt. Dabei betrug die Klebfläche 20 x 30mm bei einer Schichtdicke von 0,3mm und Glaskugeln als Abstandshalter. Die Messung der Schlagschälfestigkeit erfolgte jeweils bei den angegebenen Temperaturen (23°C, -30 °C) als Dreifachbestimmung auf einem Zwick 450 Schlagpendel bei 2 m/s. Als Schlagschälfestigkeit, wird die gemittelte Kraft in N/mm unter der Messkurve von 25% bis 90% gemäss ISO11343 angegeben.
Die Klebstoffe wurden bei 35 min bei 175°C Ofentemperatur gehärtet.
Für die Herstellung des Schlagzähigkeitsmodifikators **SM** wurden folgende Handelsprodukte verwendet:

Tabelle 1:

| Verbindung | Beschreibung | Hersteller |
|---|---|---|
| BHT (Ionol® CP) | Stabilisator Butylhydroxytoluol | Evonik |
| PolyTHF® 2000 | difunktionelles Polytetramethylenetherglykol mit einer Molmasse von 2000 g/mol | BASF |
| Poly bd® R45V | Hydroxyl terminiertes Polybutadien mit einer Molmasse von 2800 g/mol, OH-Funktionalität ca. 2,4-2,6 | Cray Valley |
| Vestanat IPDI | Isophorondiisocyanat | Evonik |
| Dibutylzinndilaurat | Katalysator | Thorson |

(fortgesetzt)

| Verbindung | Beschreibung | Hersteller |
|---|---|---|
| 4-Methoxyphenol | Blockierungsmittel | Solvay |

200 g PolyTHF 2000, 200 g Poly bd R45V und 2,00 g BHT als Stabilisator wurden 1h unter minimalem Rühren im Vakuum bei 90 °C entwässert. Anschließend wurden 80,64 g Isophorondiisocyanat (IPDI) und 0,053 g Dibutylzinndilaurat (DBTDL) zugegeben. Die Reaktion wurde 2 h unter Vakuum bei 90 °C bei mäßig starkem Rühren durchgeführt, um ein Isocyanatterminiertes Polymer zu erhalten: Gemessener freier NCO-Gehalt: 2,81 %.

Zu dem erhaltenen NCO-terminierten Polymer wurden 0,106 g Dibutylzinndilaurat (DBTDL) und 47,93 g 4-Methoxyphenol (HQMME) gegeben und für 5 h unter Vakuum bei 110°C die Isocyanatgruppen abreagiert. Gemessener freier NCO-Gehalt: (direkt nach Herstellung) 2,82%, (1 Tag nach Herstellung) 0,09%.

**Klebstoffzusammensetzungen Z1 bis Z11, Z2a/Z6a und Z2b/Z6b/Z7b**

Der Schlagzähigkeitsmodifikator SM wurde jeweils zur Herstellung von Epoxidharzzusammensetzungen gemäß Tabelle 2 verwendet. Die Anteile der in den Epoxidharzzusammensetzungen enthaltenen Verbindungen sind in Tabelle 2 in Gewichtsteilen ausgewiesen.

Tabelle 2

| **Z1-Z11** | **Z2a, Z6a** | **Z2b, Z6b, Z7b** | | |
|---|---|---|---|---|
| **Gewichtsteile** | **Gewichtsteile** | **Gewichtsteile** | **Chemische Zusammensetzung** | **Funktion** |
| 38 | 53 | 33 | Epoxidharz basierend auf Bisphenol A, flüssig | Epoxidharzmatrix |
| 12 | 12 | 12 | Epoxidharz basierend auf Bisphenol A, fest | Epoxidharzmatrix |
| 0,5 | 0,5 | 0,5 | *p*-Tert-butylphenylglycidylether | Reaktivverdünner |
| **35** | **20** | **40** | Blockiertes Polyurethan, SM-X | Schlagzähigkeitsmodifikator |
| * | * | * | Dicyandiamid | Härter |
| * | * | * | Benzoguanamin | Härter |
| * | * | * | Acetoguanamin | Härter |
| * | * | * | Caprinoguanamin | Härter |
| ** | - | - | Substituierter Harnstoff | Beschleuniger |
| 5,0 | 5,0 | 5,0 | $CaCO_3$ | Füllstoff |
| 6,0 | 6,0 | 6,0 | Calciumoxid | Feuchtigkeitsfänger |
| 8,0 | 8,0 | 8,0 | Pyrogene Kieselsäure | Thixotropiermittel |
| 0.3 | 0.3 | 0.3 | Russ | Farbe |
| *gemäss Tabelle 3, ** nur in Z1 sind zusätzlich 0.8 Gew.-Teile an einem substituierten Harnstoff enthalten | | | | |

Die jeweiligen Epoxidharzzusammensetzungen wurden in einer Ansatzgrösse von 350 g in einem Planetenmischer gemischt. Hierzu wurde die Mischbüchse mit den flüssigen Komponenten gefolgt von den festen Komponenten gefüllt, und wurden bei 70°C unter Vakuum gemischt. Während des Mischvorgangs (ca. 45 min) wurde das Vakuum mehrmals gebrochen und das Mischwerkzeug abgestreift. Nach Erhalt einer homogenen Mischung wurde die Epoxidharzzusammensetzung in Kartuschen abgefüllt und bei Raumtemperatur gelagert.

Die Tabelle 3 zeigt die den Epoxidharzzusammensetzungen in Tabelle 2 zusätzlich zugegebene Menge an

2,4-Diamino-1,3,5-triazin GU, respektive Dicyandiamid (Dicy), in Gewichtsteilen.

"Härter/EP" beschreibt das Verhältnis der Gesamtmenge an 2,4-Diamino-1,3,5-triazin GU zuzüglich gegebenenfalls der Gesamtmenge Dicyandiamid zu der Gesamtmenge an Epoxidgruppen des Epoxidharz A für eine stöchiometrischen Aushärtung notwendigen Verhältnisses, in Prozent. 100 % entspricht einer stöchiometrischen Aushärtung. Für 2,4-Diamino-1,3,5-triazin GU wird hierzu eine Härterfunktionalität von 4, für Dicyandiamid eine Härterfunktionalität von 5.5 angenommen.

"GU/Dicy" bezeichnet das Mol-Verhältnis von 2,4-Diamino-1,3,5-triazin GU zu Dicyandiamid.

"A/D" beschreibt das Gewichtsverhältnis des mindestens einen Epoxidharz A mit durchschnittlich mehr als einer Epoxidgruppe pro Molekül zu dem mindestens einen Zähigkeitsverbesserer D.

Die Tabelle 4 zeigt die Ergebnisse der Evaluation der erhaltenen Epoxidharzzusammensetzungen.

Die Messwerte unter "Klebstoffeigenschaften nach 1. Härtung 35min/175°C" wurden erhalten mittels Prüfkörpern, welche hergestellt wurden mittels Schritt "Simulation des Härtungszustandes nach KTL-Ofen" 4A.) (1.Härtung), wie vorgehend unter "Verwendete Prüfkörper und deren Präparation" in "Präparation" beschrieben.

Die Messwerte unter "Klebstoffeigenschaften nach 1.Härtung 35min/175°C+2.Härtung 35min/160°C+3.Härtung 35min/165°C" wurden erhalten mittels Prüfkörpern, welche hergestellt wurden mittels Schritt "Simulation des Härtungszustandes nach durchlaufen aller Prozessöfen" 4B.) (3.Härtung), wie vorgehend unter "Verwendete Prüfkörper und deren Präparation" in "Präparation" beschrieben.

"Blasen" bezeichnet das vereinzelte Auftreten von Blasen aufgrund von Gasentwicklung während der Härtung im Bruchbild der ausgehärteten Messproben. Diese sind dahingehend nachteilig, dass sich diese entstehenden Fehlstellen (Hohlräume) negativ auf die mechanischen Eigenschaften auswirken können.

Die Figuren 1 bis 4 zeigen die Entwicklung des Kraftniveaus während der dem Schritt 5.) Abkühlung der Proben nach der Simulation des Härtungszustandes 4A.) (1.Härtung), respektive 4B.) (3.Härtung), wie vorgehend unter "Verwendete Prüfkörper und deren Präparation" in "Präparation" beschrieben.

Tabelle 3

| | Z1 | Z2 | Z3 | Z4 | Z5 | Z6 | Z7 | Z8 | Z9 | Z10 | Z11 | Z2a | Z6a | Z2b | Z6b | Z7b |
|---|---|---|---|---|---|---|---|---|---|---|---|---|---|---|---|---|
| Dicy | 3.57 | 3.57 | - | - | - | 0.71 | 1.07 | 0.71 | 1.07 | 0.71 | 1.07 | 4.81 | 0.96 | 3.16 | 0.63 | 0.95 |
| Benzoguanamin | - | - | 10.94 | - | - | 8.75 | 7.66 | - | - | - | - | - | 11.79 | - | 7.74 | 6.77 |
| Acetoguanamin | - | - | | 7.31 | - | - | - | 5.85 | 5.12 | - | - | - | - | - | - | - |
| Caprinoguanamin | - | - | - | - | 13.87 | - | - | - | - | 11.10 | 9.71 | - | - | - | - | - |
| Härter/EP | 100% | 100% | 100% | 100% | 100% | 100% | 100% | 100% | 100% | 100% | 100% | 100% | 100% | 100% | 100% | 100% |
| GU/Dicy | - | - | - | - | - | 12.3 | 7.2 | - | - | - | - | - | 12.3 | - | 12.3 | 7.1 |
| A/D | 1.43 | 1.43 | 1.43 | 1.43 | 1.43 | 1.43 | 1.43 | 1.43 | 1.43 | 1.43 | 1.43 | 3.25 | 3.25 | 1.13 | 1.13 | 1.13 |

Tabelle 4

| | Z1 | Z2 | Z3 | Z4 | Z5 | Z6 | Z7 | Z8 | Z9 | Z10 | Z11 | Z2a | Z6a | Z2b | Z6b | Z7b |
|---|---|---|---|---|---|---|---|---|---|---|---|---|---|---|---|---|
| Klebstoffeigenschaften nach 1. Härtung 35min/175°C | | | | | | | | | | | | | | | | |
| E-Modul [MPa] | 1070 | 1030 | 60 | 970 | 568 | 606 | 1000 | 1170 | 1110 | 929 | 943 | 1730 | 1680 | 842 | 384 | 619 |
| ZF [MPa] | 25 | 27 | 1.3 | 18 | 10 | 12 | 22 | 23 | 23 | 19 | 20 | 38.1 | 3 | 22.5 | 10 | 13 |
| BD [%] | 20 | 21 | 240 | 6 | 40 | 40 | 25 | 7 | 11 | 16 | 21 | 8.3 | 0.2 | 40.9 | 100 | 83 |
| ZSF [MPa] | 25.7 | 26.8 | 6.0 | 17.4 | 12.9 | 18.5 | 23.3 | 25.4 | 25.7 | 23.8 | 24.8 | 29.1 | 19.6 | 24.6 | 18 | 19.8 |
| IP 23°C | 49.6 | 45.3 | 1.6 | 33.7 | 6.2 | 41 | 47 | 40.6 | 45.4 | 39 | 40.2 | 43.8 | 7 | 52.7 | 45.2 | 49.2 |
| IP -30°C | 51.2 | 46.8 | 0.2 | 17.7 | 0.2 | 0 | 8.3 | 33.6 | 39.4 | 0 | 0 | 29.5 | 0.4 | 55.2 | 0 | 14.5 |
| T-Peel | 11.1 | 12.2 | 2.0 | 5.7 | 3 | 11.1 | 11.9 | 10.7 | 10 | 6.2 | 6.1 | 7.3 | 3.3 | 12.8 | 11.6 | 12.3 |
| Blasen | - | - | + | + | + | - | - | + | - | + | - | - | - | - | - | - |
| Klebstoffeigenschaften nach 1.Härtung 35min/175°C+2.Härtung 35min/160°C+3.Härtung 35min/165°C | | | | | | | | | | | | | | | | |
| E-Modul [MPa] | 1060 | 1000 | 1060 | 1080 | 998 | 1070 | 1200 | 1150 | 1080 | 1030 | 1050 | 1750 | 2090 | 830 | 848 | 871 |
| ZF [MPa] | 26 | 27 | 22 | 22 | 21 | 22.7 | 26 | 23 | 23 | 22.4 | 23 | 39.3 | 42.2 | 23.2 | 19 | 20 |
| BD [%] | 25 | 21 | 7 | 6 | 13 | 15.5 | 19 | 9 | 9 | 9.1 | 15 | 7.6 | 6.5 | 47.7 | 28 | 31 |
| ZSF [MPa] | 24.8 | 27.6 | 19.6 | 24.4 | 19.7 | 26.4 | 25.7 | 26.3 | 26.3 | 24.9 | 23.8 | 30 | 29.7 | 26.6 | 23.5 | 23 |
| IP 23°C | 52 | 46 | 36.4 | 37.5 | 31.6 | 47.6 | 49.4 | 43.7 | 45.5 | 39.7 | 47.3 | 46.6 | 33.3 | 54.3 | 47.4 | 50 |
| IP -30°C | 53 | 48 | 13.4 | 30.6 | 2.9 | 41.1 | 43.4 | 37.9 | 42.8 | 10.8 | 38.5 | 31.7 | 3.8 | 59.2 | 45 | 45.3 |
| T-Peel | 12.2 | 12.8 | 8.9 | 10 | 6.2 | 12.4 | 12.3 | 11.5 | 12 | 10.1 | 8.9 | 7.5 | 7.7 | 12.9 | 12.6 | 12.4 |

**Patentansprüche**

1. Einkomponentige hitzehärtende Epoxidharzzusammensetzung umfassend

   a) mindestens ein Epoxidharz **A** mit durchschnittlich mehr als einer Epoxidgruppe pro Molekül;
   b) mindestens ein 2,4-Diamino-1,3,5-triazin **GU,** das in 6-Stellung

   - einen Alkylrest mit 1 bis 20 C-Atomen, bei dem gegebenenfalls in α-Stellung ein H-Atom durch einen 2,4-Diamino-1,3,5-triazin-6-yl-Rest ersetzt ist,
   - einen Cycloalkylrest mit 5 bis 12 C-Atomen oder
   - einen Arylrest mit 6 bis 12 C-Atomen enthält;

   c) mindestens einen Zähigkeitsverbesserer **D,** wobei es sich um ein endständig blockiertes Polyurethanpolymer **D1** handelt; und
   wobei das Gewichtsverhältnis des mindestens einen Epoxidharz **A** mit durchschnittlich mehr als einer Epoxidgruppe pro Molekül zu dem mindestens einen Zähigkeitsverbesserer **D** von 0.4 - 3.3, beträgt.

2. Einkomponentige hitzehärtende Epoxidharzzusammensetzung nach Anspruch 1, wobei bei dem endständig blockierten Polyurethanpolymer **D1** um ein endständig blockiertes Polyurethanprepolymer der Formel (I) handelt;

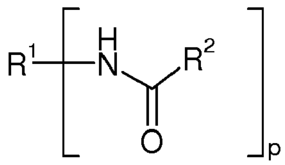
(I)

   wobei $R^1$ für einen p-wertigen Rest eines mit Isocyanatgruppen terminierten linearen oder verzweigten Polyurethanprepolymers nach dem Entfernen der endständigen Isocyanatgruppen steht;
   p für einen Wert von 2 bis 8 steht; und
   $R^2$ steht für eine Blockierungsgruppe, welche sich bei einer Temperatur über 100°C abspaltet, steht.

3. Einkomponentige hitzehärtende Epoxidharzzusammensetzung nach einem der vorgehenden Ansprüche, wobei es sich bei b) mindestens ein 2,4-Diamino-1,3,5-triazin **GU** um ein 2,4-Diamino-1,3,5-triazin (**GU**) handelt, das in 6-Stellung

   - einen Alkylrest mit 1 bis 20 C-Atomen, insbesondere 1 bis 10 C-Atomen, 1 bis 9 C-Atomen, 1 bis 3 C-Atomen, besonders bevorzugt 1 C-Atom, bei dem sich in α-Stellung ein H-Atom befindet, enthält; oder
   - einen Arylrest mit 6 bis 12 C-Atomen, insbesondere 6-7 C-Atomen, besonders bevorzugt 6 C-Atomen; enthält.

4. Einkomponentige hitzehärtende Epoxidharzzusammensetzung nach einem der vorgehenden Ansprüche, wobei das b) mindestens eine 2,4-Diamino-1,3,5-triazin **GU** ausgewählt ist aus der Liste bestehend aus 6-Nonyl-2,4-diamino-1,3,5-triazin (Caprinoguanamin), 6-Phenyl-2,4-diamino-1,3,5-triazin (Benzoguanamin) und 6-Methyl-2,4-diamino-1,3,5-triazin (Acetoguanamin); insbesondere 6-Phenyl-2,4-diamino-1,3,5-triazin (Benzoguanamin) und 6-Methyl-2,4-diamino-1,3,5-triazin (Acetoguanamin); am meisten bevorzugt 6-Methyl-2,4-diamino-1,3,5-triazin (Acetoguanamin).

5. Einkomponentige hitzehärtende Epoxidharzzusammensetzung nach einem der vorgehenden Ansprüche, wobei das Mol-Verhältnis der Molmenge an 2,4-Diamino-1,3,5-triazin **GU** zu der Molmenge Epoxidgruppen des Epoxidharz **A** von 3.8 - 4.2, insbesondere 3.9 - 4.1, beträgt.

6. Einkomponentige hitzehärtende Epoxidharzzusammensetzung nach einem der Ansprüche 1 bis 3, wobei es sich bei b) mindestens ein 2,4-Diamino-1,3,5-triazin **GU** um ein 2,4-Diamino-1,3,5-triazin (**GU**) handelt, das in 6-Stellung einen Arylrest mit 6 bis 12 C-Atomen, insbesondere 6-7 C-Atomen, besonders bevorzugt 6 C-Atomen, enthält, und die einkomponentige hitzehärtende Epoxidharzzusammensetzung weiter Dicyandiamid enthält.

7. Einkomponentige hitzehärtende Epoxidharzzusammensetzung nach Anspruch 6, wobei das Mol-Verhältnis von 2,4-Diamino-1,3,5-triazin **GU** zu Dicyandiamid von 9.0 - 2.0, insbesondere 7.0 - 3.0, bevorzugt von 6.0 - 4.0, beträgt.

**8.** Einkomponentige hitzehärtende Epoxidharzzusammensetzung nach einem der vorgehenden Ansprüche, wobei das Gewichtsverhältnis des mindestens einen Epoxidharz **A** mit durchschnittlich mehr als einer Epoxidgruppe pro Molekül zu dem mindestens einen Zähigkeitsverbesserer **D** von 0.55 - 2.4, besonderes bevorzugt 0.7 - 2.0, am meisten bevorzugt 1.0 - 1.8, beträgt.

**9.** Einkomponentige hitzehärtende Epoxidharzzusammensetzung nach Anspruch 8, wobei das Gewichtsverhältnis des mindestens einen Epoxidharz **A** mit durchschnittlich mehr als einer Epoxidgruppe pro Molekül zu dem mindestens einen Zähigkeitsverbesserer **D** von 1.0 - 1.6 beträgt.

**10.** Einkomponentige hitzehärtende Epoxidharzzusammensetzung nach einem der vorgehenden Ansprüche, wobei die Epoxidharzzusammensetzung weniger als 5 Gew.-%, insbesondere weniger als 1 Gew.-%, bevorzugt weniger als 0.5 Gew.-%, besonders bevorzugt weniger als 0.3 Gew.-%, weniger als 0.1 Gew.-%, am meisten bevorzugt weniger als 0.05 Gew.-%, an Härtern für Epoxidharze ausgewählt aus der Liste bestehend aus Anhydride von mehrwertigen Carbonsäuren und Dihydrazide aufweist, bezogen auf das Gesamtgewicht der Epoxidharzzusammensetzung.

**11.** Verfahren zur Verklebung von hitzestabilen Substraten, welches die Schritte umfasst:

a) Applizieren einer hitzehärtenden Epoxidharzzusammensetzung gemäss einem der Ansprüche 1 - 10 auf die Oberfläche eines hitzestabilen Substrates **S1,** insbesondere eines Metalls;
b) Kontaktieren der applizierten hitzehärtenden Epoxidharzzusammensetzung mit der Oberfläche eines weiteren hitzestabilen Substrates **S2,** insbesondere eines Metalls;
c) Erhitzen der Epoxidharzzusammensetzung auf eine Temperatur von 100 bis 220°C, vorzugsweise 140 - 220°C, insbesondere von 140 - 200°C, bevorzugt zwischen 160 und 190°C;
d) Abkühlen der Epoxidharzzusammensetzung auf eine Temperatur von weniger als 50°C, vorzugsweise 50 - 10°C, insbesondere von 40 - 15°C.
e) Erneutes Erhitzen der Epoxidharzzusammensetzung auf eine Temperatur von 100 bis 220°C, vorzugsweise 100 - 200°C, insbesondere von 100 - 170°C, bevorzugt zwischen 120 und 170°C.
f) Vorzugsweise erneutes Abkühlen der Epoxidharzzusammensetzung auf eine Temperatur von weniger als 50°C, vorzugsweise 50 - 10°C, insbesondere von 40 - 15°C.
g) Vorzugsweise erneutes Erhitzen der Epoxidharzzusammensetzung auf eine Temperatur von 100 bis 220°C, vorzugsweise 100 - 200°C, insbesondere von 100 - 170°C, bevorzugt zwischen 120 und 170°C.

**12.** Verfahren gemäss Anspruch 11, wobei in dem Schritt c) und in dem Schritt e) und gegebenenfalls in dem Schritt g) Erhitzen der Epoxidharzzusammensetzung, die Epoxidharzzusammensetzung für 20 min - 60 min, 25 min - 55 min, 30 min - 50 min, besonders bevorzugt 30 min - 40 min, bei der genannten Temperatur, insbesondere der jeweils als bevorzugt ausgewiesenen Temperatur, belassen wird.

**13.** Verfahren gemäss Anspruch 11 oder 12, wobei zwischen Schritt c) und e) und gegebenenfalls zwischen Schritt e) und g) mit dem Verbund der Epoxidharzzusammensetzung mit den hitzestabilen Substraten **S1** und **S2** ein örtlicher Transportschritt, stattfindet.

**14.** Verklebter Artikel erhalten aus dem Verfahren gemäss einem der Ansprüche 11 - 13.

**15.** Verwendung einer hitzehärtenden Epoxidharzzusammensetzung gemäss einem der Ansprüche 1 bis 10 als einkomponentiger hitzehärtender Klebstoff, insbesondere als hitzehärtender einkomponentiger Klebstoff im Fahrzeugbau und Sandwichpanelbau, insbesondere im Fahrzeugbau.

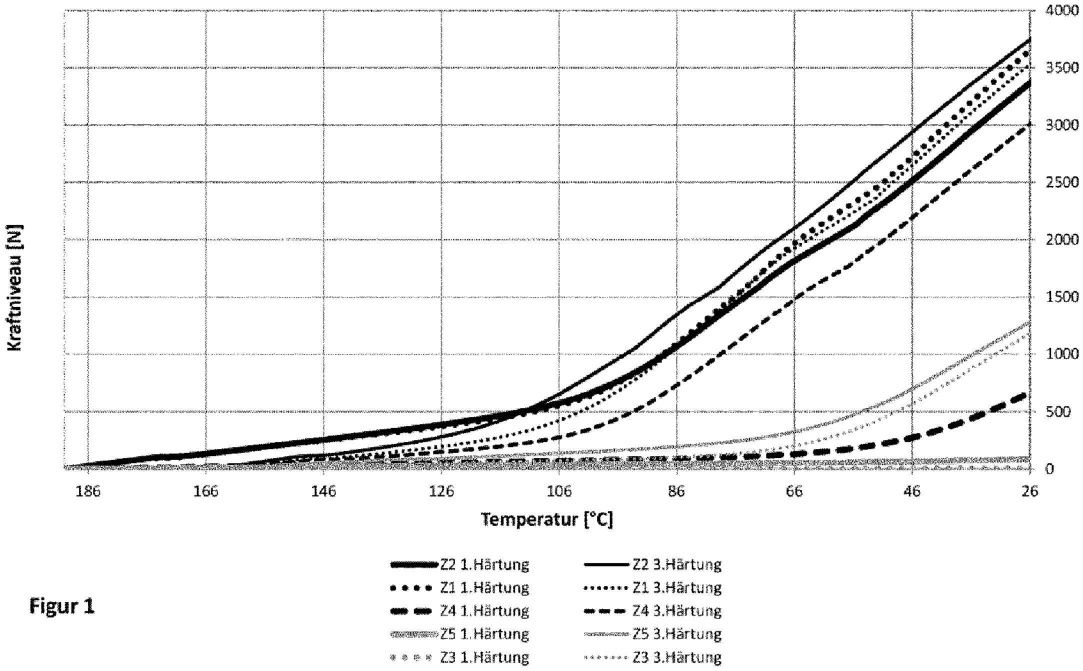
Kraftniveau [N]
4000
3500
3000
2500
2000
1500
1000
500
0
186
166
146
126
106
86
66
46
26
Temperatur [°C]
Z2 1.Härtung
Z2 3.Härtung
Z1 1.Härtung
Z1 3.Härtung
Z4 1.Härtung
Z4 3.Härtung
Z5 1.Härtung
Z5 3.Härtung
Z3 1.Härtung
Z3 3.Härtung

Figur 1

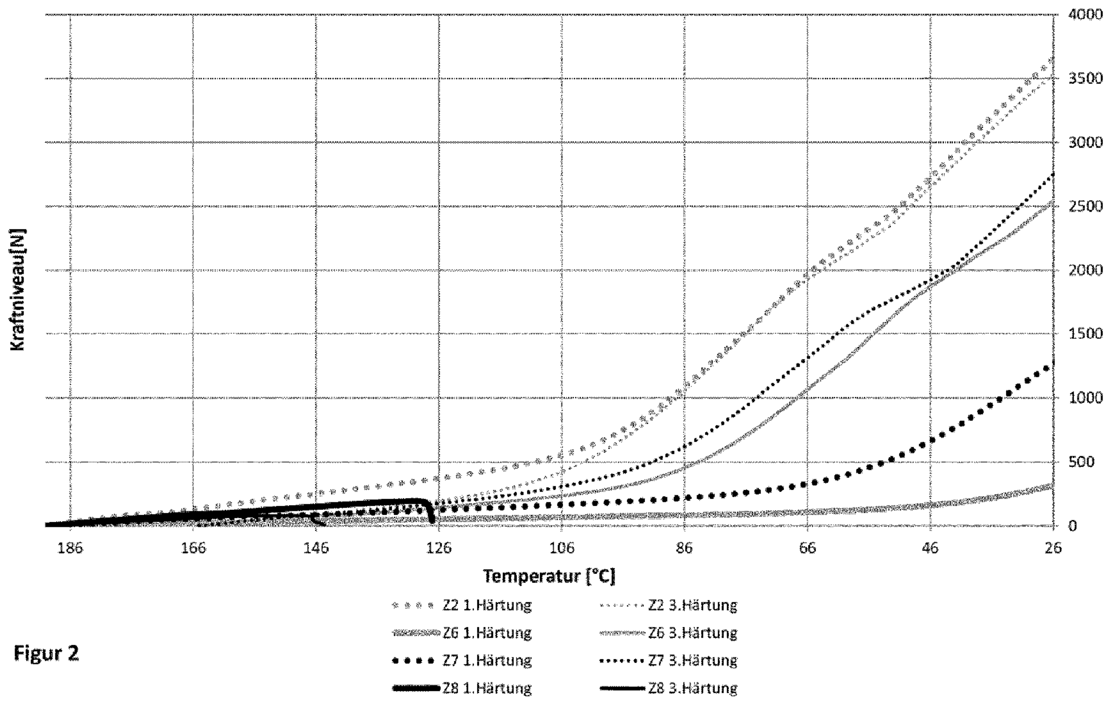
Kraftniveau[N]
4000
3500
3000
2500
2000
1500
1000
500
0
186
166
146
126
106
86
66
46
26
Temperatur [°C]
Z2 1.Härtung
Z2 3.Härtung
Z6 1.Härtung
Z6 3.Härtung
Z7 1.Härtung
Z7 3.Härtung
Z8 1.Härtung
Z8 3.Härtung

Figur 2

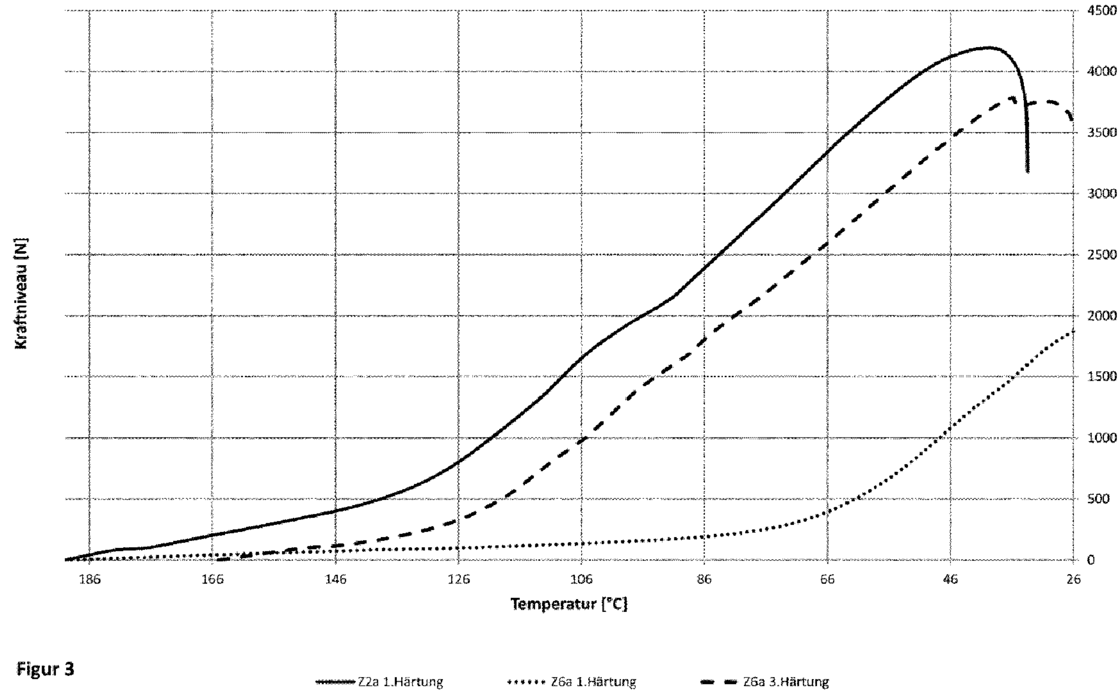
Kraftniveau [N]
4500
4000
3500
3000
2500
2000
1500
1000
500
0
186
166
146
126
106
86
66
46
26
Temperatur [°C]
Z2a 1.Härtung
Z6a 1.Härtung
Z6a 3.Härtung

Figur 3

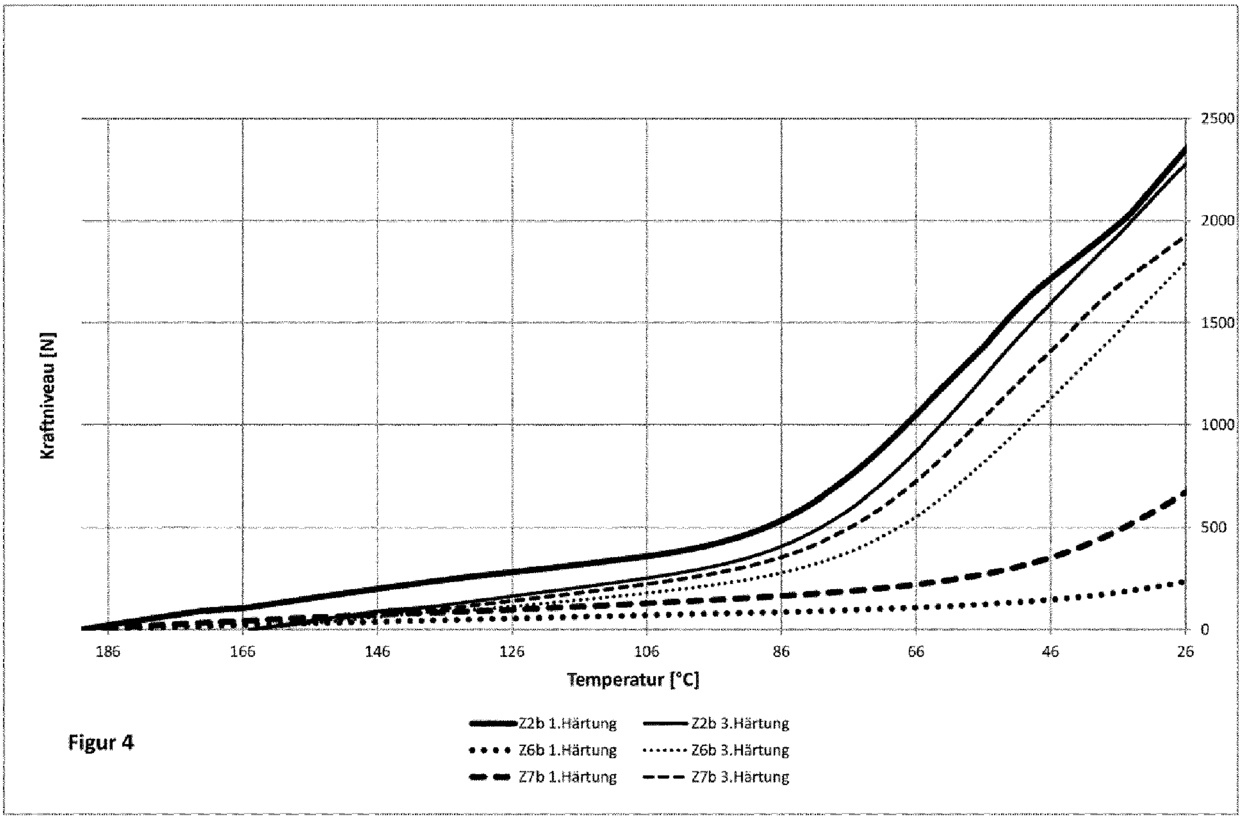
Kraftniveau [N]
2500
2000
1500
1000
500
0
186
166
146
126
106
86
66
46
26
Temperatur [°C]
Z2b 1.Härtung
Z2b 3.Härtung
Z6b 1.Härtung
Z6b 3.Härtung
Z7b 1.Härtung
Z7b 3.Härtung

Figur 4

Fig. 5

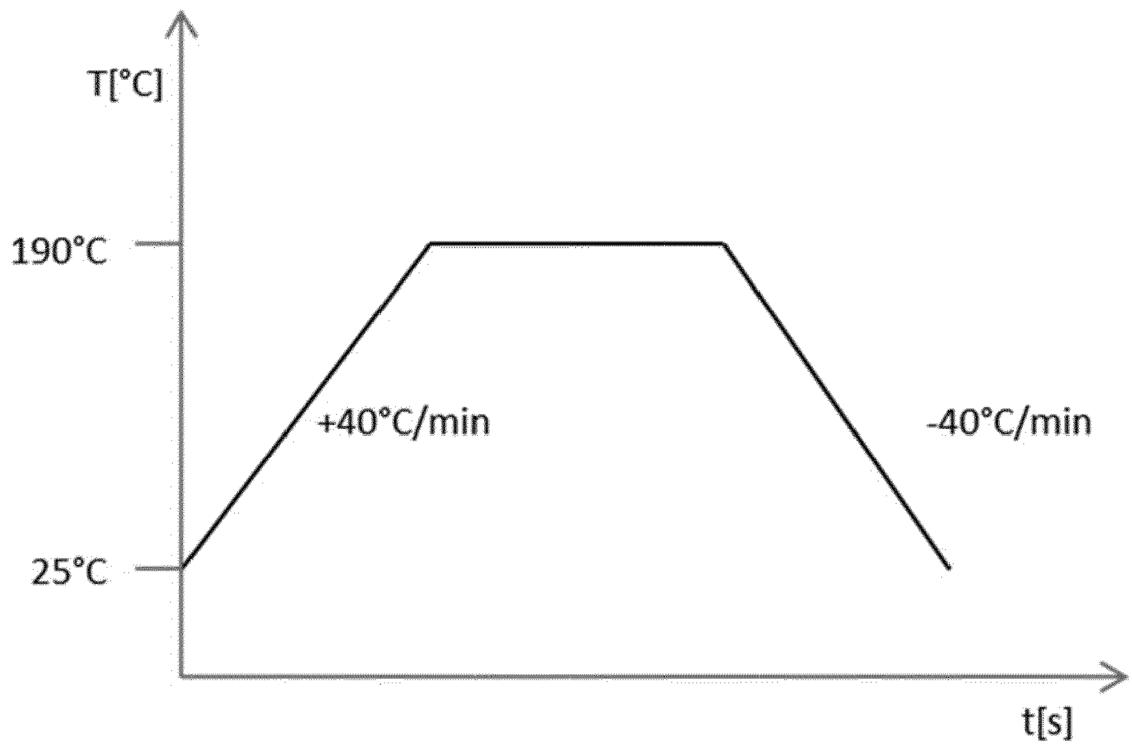

Europäisches Patentamt
European Patent Office
Office européen des brevets

# EUROPÄISCHER RECHERCHENBERICHT

Nummer der Anmeldung
EP 18 18 8754

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/197397 A1 (JIALANELLA GARY L [US] ET AL) 13. Juli 2017 (2017-07-13)<br>* Tabellen 1, 2 *<br>* Absatz [0036] *<br>----- | 1-15 | INV.<br>C08G18/48<br>C08G18/69<br>C08G18/75<br>C08G18/80<br>C08G18/24<br>C08G59/18<br>C08G59/50 |
| X | EP 3 347 394 A1 (DOW GLOBAL TECHNOLOGIES LLC [US]) 18. Juli 2018 (2018-07-18)<br>* Tabellen 1, 3, 5, 7 *<br>* Seite 9, Zeile 9 - Zeile 19 *<br>----- | 1-15 | |
| | | | RECHERCHIERTE SACHGEBIETE (IPC) |
| | | | C08G<br>C09J |

Der vorliegende Recherchenbericht wurde für alle Patentansprüche erstellt

1

| Recherchenort | Abschlußdatum der Recherche | Prüfer |
|---|---|---|
| München | 1. Februar 2019 | Sütterlin, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 18 8754

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-02-2019

| Im Recherchenbericht angeführtes Patentdokument | Datum der Veröffentlichung | Mitglied(er) der Patentfamilie | Datum der Veröffentlichung |
|---|---|---|---|
| US 2017197397 A1 | 13-07-2017 | CN 104144959 A | 12-11-2014 |
| | | EP 2828308 A2 | 28-01-2015 |
| | | JP 6173424 B2 | 02-08-2017 |
| | | JP 2015517001 A | 18-06-2015 |
| | | KR 20140138760 A | 04-12-2014 |
| | | US 2015001281 A1 | 01-01-2015 |
| | | US 2017197397 A1 | 13-07-2017 |
| | | WO 2013142750 A2 | 26-09-2013 |
| EP 3347394 A1 | 18-07-2018 | BR 112018003466 A2 | 25-09-2018 |
| | | CN 107922576 A | 17-04-2018 |
| | | EP 3347394 A1 | 18-07-2018 |
| | | JP 2018530643 A | 18-10-2018 |
| | | KR 20180052647 A | 18-05-2018 |
| | | US 2018258329 A1 | 13-09-2018 |
| | | WO 2017044359 A1 | 16-03-2017 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- Römpp Chemie Lexikon. Georg Thieme Verlag, 17. Juni 2018